# EUROPEAN PATENT APPLICATION

(11) **EP 2 757 772 A2**
(43) Date of publication of application: **23.07.2014**
(21) Application number: 14150839.0
(22) Date of filing: 10.01.2014
(51) Int. Cl.: H04N 5/232, H04N 5/235

(54) **Image pickup apparatus, remote control apparatus, and methods of controlling image pickup apparatus and remote control apparatus**

(30) Priority: 17.01.2013 JP 2013005912; 25.01.2013 JP 2013011574
(71) Applicant: CANON KABUSHIKI KAISHA, Ohta-ku Tokyo 146-8501 (JP)
(72) Inventor: Nakamura, Shun, Ohta-ku, Tokyo (JP)
(74) Representative: Hitching, Peter Matthew

(57) **Abstract**

An image pickup apparatus (10), adapted to be used with a remote control apparatus (20) external to the image pickup apparatus, includes image pickup means (121) for performing photoelectric conversion on a captured image to generate a first image signal representing the captured image, communication means (169) operable to send the generated first image signal to the remote control apparatus, and further operable to receive from the remote control apparatus a second image signal relating to the sent first image signal, and control means (14, 124) operable to use the received second image signal to detect a target object in a further captured image represented by a third image signal generated by the image pickup means subsequently to the first image signal.

## Description

### BACKGROUND OF THE INVENTION

### Field of the Invention

The present invention relates to a system including an image pickup apparatus equipped with a tracking function for tracking an arbitrary object and a remote control terminal which externally controls the image pickup apparatus.

### Description of the Related Art

Japanese Patent Laid-open No. 2009-273033 discloses a camera system including a camera and a controller which can externally control the camera. In this camera system, by an operator operating the controller, the focus position can be set (specified) at the position of an intended object while observing shot image data sent from the camera. At such setting, the controller sends information relating to the set position of the object to the camera. Thereby, the camera can execute AF processing and the like at the position of the intended object on the basis of the received position information.

Some image pickup apparatuses such as digital cameras can automatically track the selected object by selecting an arbitrary object within a shot image screen.

In the above described system where the camera is controlled from the controller, communication time lag occurs because it takes time to send and receive data through communication. For example, when the image shot by the camera is to be displayed by the controller, it takes time until the shot image is to be displayed by the controller because it takes time to communicate the shot image data. Due to such communication time lag, when an operator checks the shot image by the controller, the image is to be displayed being delayed from the time when the image was taken. This also applies when control commands are given to the camera from the controller. Due to the communication time lag, the camera receives the position information being delayed from the time when the controller specifies the position of the intended object.

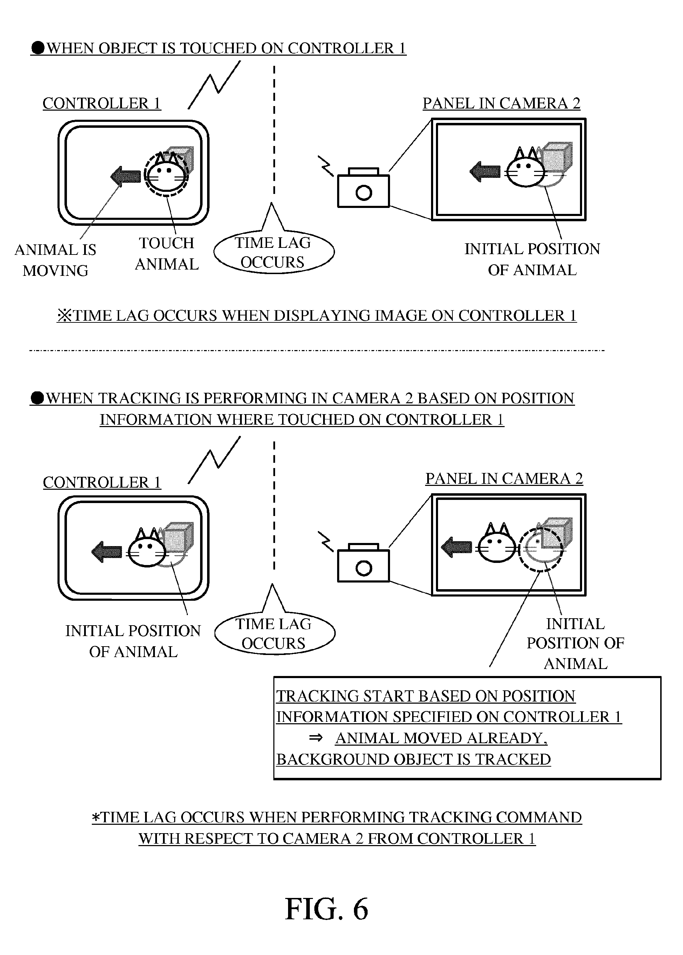

Because communication time lag occurs in the above described system, there may be problems such as described below when performing a tracking control with respect to an object which is moving, for example, by using the above system. For example, as illustrated in FIG. 6, when an operator specifies and sends the position of the intended object (an animal) in the controller, the object may not be at the position specified by the operator at the time when the camera receives the position information.

Especially, if the object moves fast or if the communication time lag is long, the problem becomes more significant. In a case where the object which the operator wishes to track is already not at the position, an object which happens to be at the specified position at that time will be tracked. Therefore, there are concerns that adjustments of focus and exposure may be different from what the operator has intended. In such a case, in order to track the object more accurately, the controller needs to foresee the movement of the object which the operator wishes to track, and at the same time, the object needs to be selected taking the length of communication time lag into consideration.

### SUMMARY OF THE INVENTION

The present invention provides an image pickup apparatus, a remote control apparatus, and methods of controlling the image pickup apparatus and the remote control apparatus capable of accurately tracking an object specified by an operator externally without depending on a communication time lag.

The present invention in its first aspect provides an image pickup apparatus as specified in claims 1 to 11.

The present invention in its second aspect provides a remote control apparatus as specified in claims 12 to 16.

The present invention in its third aspect provides a method of controlling an image pickup apparatus as specified in claims 17 to 27.

The present invention in its fourth aspect provides a method of controlling a remote control apparatus as specified in claims 28 to 32.

Further aspects of the present invention provide programs as specified in claims 33 and 34.

Further features of the present invention will become apparent from the following description of exemplary embodiments (with reference to the attached drawings).

### BRIEF DESCRIPTION OF THE DRAWINGS

FIG. 1 is a block diagram illustrating a configuration of an image pickup apparatus and a remote control terminal in each of embodiments of the present invention.
FIGS. 2A is a flowchart illustrating a process performed in the image pickup apparatus in each of the embodiments of the present invention.
FIG. 2B is a flowchart illustrating a process performed in the remote control terminal in each of the embodiments of the present invention.
FIG. 3A is a flowchart illustrating a process performed in the image pickup apparatus during performing a remote control in Embodiment 1.
FIG. 3B is a flowchart illustrating a process performed in the remote control terminal during performing the remote control in Embodiment 1.
FIG. 4 is a flowchart illustrating a tracking start process performed in the image pickup apparatus in Embodiment 1.
FIG. 5 is a flowchart illustrating a tracking continuance process performed in the image pickup apparatus in each of the embodiments of the present invention.
FIG. 6 illustrates problems that occur in a system including the image pickup apparatus and the remote control terminal when a tracking command is made by the remote control terminal.
FIG. 7 illustrates a method of specifying a tracking object in Embodiment 1 of the present invention in the system including the image pickup apparatus and the remote control terminal.
FIG. 8A is a flowchart illustrating a process performed in the image pickup apparatus during performing the remote control in Embodiment 2.
FIG. 8B is a flowchart illustrating a process performed in the remote control terminal during performing the remote control in Embodiment 2.
FIG. 9 is a flowchart illustrating a tracking start process performed in the image pickup apparatus in Embodiment 2.
FIG. 10A is a flowchart illustrating a process performed in the image pickup apparatus during performing the remote control in Embodiment 3.
FIG. 10B is a flowchart illustrating a process performed in the remote control terminal during performing the remote control in Embodiment 3.
FIG. 11 is a flowchart illustrating a tracking start process performed in the image pickup apparatus in Embodiment 3.
FIG. 12A is a flowchart illustrating a process performed in the image pickup apparatus during performing the remote control in a modification example of Embodiment 1.
FIG. 12B is a flowchart illustrating a process performed in the remote control terminal during performing the remote control in the modification example of Embodiment 1.
FIG. 13 is a flowchart illustrating a tracking start process performed in the image pickup apparatus in the modification example of Embodiment 1.
FIG. 14 is a flowchart illustrating a pattern matching process in the modification example of Embodiment 1.
FIG. 15 illustrates a process of specifying a tracking object in the modification example of Embodiment 1 in a system including an image pickup apparatus and a remote control terminal.

### DESCRIPTION OF THE EMBODIMENTS

### [EMBODIMENT 1]

Hereinafter, Embodiment 1 of the present invention will be described with reference to the appended drawings. The embodiment described below is an example of a means to realize the present invention and can be arbitrarily modified or changed according to configurations and various conditions of apparatuses to which the present invention is to be applied. Therefore, the present invention is not limited to the following embodiments.

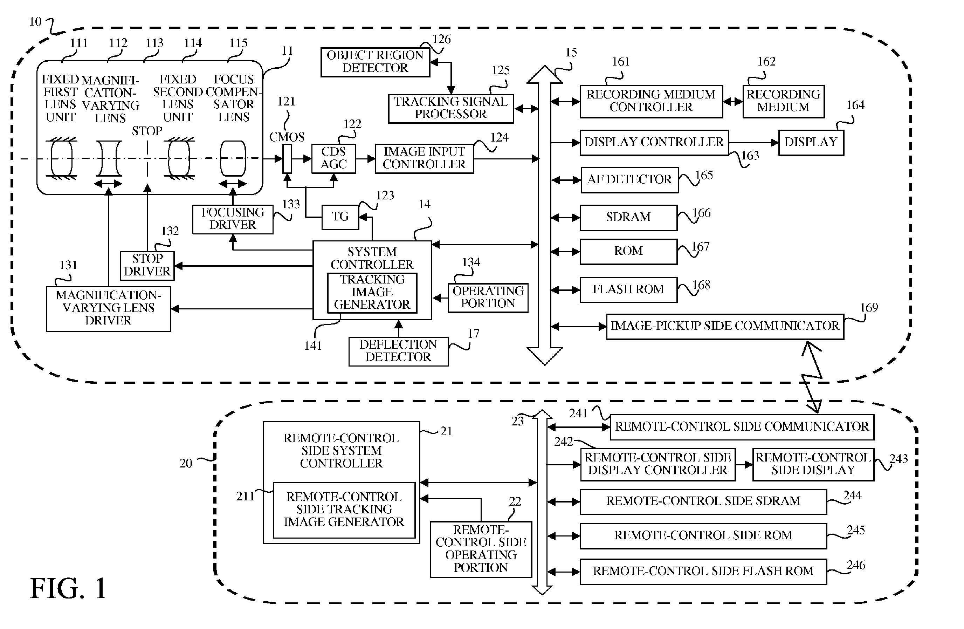

FIG. 1 is a block diagram illustrating a configuration of an image pickup apparatus equipped with an image processing function and a remote control terminal (a communication apparatus, or a remote control apparatus) equipped with a function to remotely (externally) operate the image pickup apparatus in an embodiment of the present invention.

As illustrated in FIG. 1, a camera system according to the present embodiment includes a camera 10 and a remote control terminal 20. By the camera 10 and the remote control terminal 20 including an image-pickup side communicator 169 (an image-pickup side communication unit, or communication means) and a remote-control side communicator 241 (a remote-control side communication unit), respectively, information can be sent and received therebetween.

First of all, a configuration of the camera (image pickup apparatus) 10 will be described. The camera 10 is configured so as to obtain image signals through image pickup lenses 11. The camera 10 includes an image pickup element (CMOS) 121, a CDS/AGC 122, a timing generator (TG) 123 and an image input controller 124. The camera 10 further includes a tracking signal processor 125 and an object region detector 126. The camera 10 further includes a magnification-varying lens driver 131, a stop driver 132, a focusing driver 133, an operating portion 134 and a system controller 14. The camera 10 further includes a bus 15, a recording medium controller 161, a recording medium 162, a display controller 163, a display 164, an AF detector 165, an SDRAM 166, a ROM 167, a flash ROM 168, an image-pickup side communicator 169, and a deflection detector 17.

The system controller 14 functions as a controller (control means) which integrally controls an operation of the entire camera. The system controller 14 controls individual portions according to a predetermined control program based on an input from the operating portion 134.

In the ROM 167 which is connected via the bus 15, the control program which is executed by the system controller 14 and various data which are needed for the control are stored. In the flash ROM 169 which is connected via the bus 15, various setting information relating to the operation of the camera 10 such as user setting information are stored. The SDRAM 166 which is connected via the bus 15 is used as an arithmetic working region for the system controller 14 and is used as a temporary storage region to store image data. In such way, in the present invention, the SDRAM 166 functions as a memory for storing image signals picked up by the image pickup element 121 for a predetermined time period.

The image pickup lenses (image pickup optical system) 11 includes a fixed first lens unit 111, a magnification-varying lens 112, a stop 113, a fixed second lens unit 114, and a focus compensator lens 115.

The magnification-varying lens 112 moves back and forth along the optical axis of the image pickup optical system by being driven by the magnification lens driver 131. In this embodiment, the front side means toward the object side and the back side means toward the image side. The focus compensator lens 115 moves back and forth along the optical axis of the image pickup optical system by being driven by the focusing driver 133.

The system controller 14 controls the magnification-varying lens driver 131 and the focusing driver 133 to control the position of the magnification-varying lens 112 and the position of the focus compensator lens 115, and performs zooming and focusing of the image pickup lenses 11.

The stop 113 is configured with an iris stop, for example, and operates by being driven by the stop driver 132. The system controller 14 controls the stop driver 132 to control the aperture amount (F number) of the stop 113, and controls the incident light amount to the image pickup element 121.

Each image pickup element (image pickup means) 121 is a photoelectric conversion element (a photodiode) which is configured with a CMOS sensor or a CCD sensor. An object image (a captured image) formed on the light receiving surface of the image pickup elements 121 by the image pickup lenses 11 is converted into signal charges according the incident light amount by the photodiodes. The signal charges accumulated in individual photodiodes are sequentially read from the image pickup elements 121 as voltage signals (image signals) according to the signal charges on the basis of drive pulses applied from the TG 123 according to a command from the system controller 14. In this embodiment, a CMOS sensor is used as an image pickup element. However, an image pickup element of other configuration such as a CCD sensor may also be used.

The CDS/AGC 122 is a correlated double sampling circuit (CDS) for removing reset noises (low frequency) included in image signals output from the image pickup elements 121 and an AGC circuit for amplifying the image signals and for controlling the image signals be a certain size level. The CDS/AGC 122 performs a correlated double sampling process on image signals output from the image pickup elements 121 and amplifies the image signals.

The image input controller 124 imports the image signals output from the CDS/AGC 122 and stores the image signals in the SDRAM 166. The image signals stored in the SDRAM 166 are to be displayed in the display 164 by the display controller 163. In a mode where the image signals are to be stored, the image signals are stored in the storage medium 162 by the storage medium controller 161. At the time of remote controlling by the remote control terminal 20, the image signals are sent to the remote-control side communicator 241 (a receiver) in the remote control terminal 20 by the image-pickup side communicator 169. In the after-mentioned modification example of Embodiment 1, the image signals are stored in the SDRAM 166 for the time length corresponding to communication delay time. This will be described in detail in the description of the modification example of Embodiment 1.

The tracking image generator 141 in the system controller 14 imports the image signals stored in the SDRAM 166 and generates a tracking image (tracking image signals) if a tracking command is given through the operating portion 134. In this embodiment, a touch panel is one of the operating portion 134, and a predetermined region whose center is at the coordinates where touched on the displayed image is a tracking image. Instead of using a touch panel, a system where the center coordinates of a region to be tracked or a region itself is set by operating the operation keys may be adopted. The generated tracking image signals are stored in the SDRAM 166. In the after-mentioned modification example of Embodiment 1, if the tracking command is given from the remote control terminal, the tracking image generator 141 can generate tracking image signals from the past image signals based on coordinate information generated by the remote-control side tracking image generator 211 in the remote control terminal 20. This will also be described in detail in the description of the modification example of Embodiment 1.

The tracking signal processor 125 imports the tracking image signals from the SDRAM 166 according to a command from the system controller 14 and generates a feature (characteristic information) including histograms of color information and a histogram of luminance information from the tracking image signals.

As for the image signals to be imported in to the tracking signal processor 125, the (tracking) image signals generated by the remote-control side tracking image generator 211 in the remote control terminal 20, which will be described below, may be imported. This will be described in detail below.

The object region detector 126 performs a search process on the image signals which are currently being picked up to search for a tracking object (a target object) based on the above described feature value and specifies whether an object corresponding to the tracking object exists in a predetermined region in the picked-up image screen. If the tracking object exists, the tracking region is decided on the basis of the position coordinates where the object exists and the result thereof is sent to the system controller 14 to perform AF control, etc. The position coordinates where the object exists is stored in the SDRAM 166, and by using this information when detecting a tracking object region next time and thereafter, the area where the search process is to be performed to search for the tracking object can be limited. When specifying a tracking object region, the position coordinates to be stored in the SDRAM 166 are updated every time the position coordinates where the object exists are updated.

Thus, in the present embodiment, the above described tracking signal processor 125 and the object region detector 126 function as specification portions for specifying a tracking region of a tracking object.

When the system controller 14 receives the above described tracking region, the system controller 14 sends the tracking region information to the AF detector 165. On the basis of the tracking region information, the AF detector 165 sets the position including the tracking object in the picked-up image screen as the region to be used for focus detection (focus detection area). Next, the AF detector 165 calculates the focus level of the set focus detection area and sends the calculated focus level to the system controller 14. The system controller 14 which received the result controls the focusing driver 133 according to the received focus level, and the focusing driver 133 controls the focus compensator lens 115. The system controller 14 further generates histograms relating to the region on the basis of the tracking region and controls the stop driver 132 so as to perform an appropriate exposure set in the flash ROM 168 on the basis of the histograms to perform AE control with respect to the tracking region.

The image-pickup side communicator (the first communicator) 169 performs communication with the remote-control side communicator 241 in the remote control terminal 20, which will be described below, and sends and receives various information. The content of information to be communicated will be described below.

Next, a configuration of the remote control terminal 20 will be described. The remote control terminal 20 includes a remote-control side system controller 21 and a remote-control side operating portion 22. The remote control terminal 20 further includes a bus 23, a remote-control side communicator 241, a remote-control side display controller 242, a remote-control side display 243 (display means), a remote-control side SDRAM 244, a remote-control side ROM 245 and a remote-control side flash ROM 246. The remote control terminal 20 is configured so as to perform sending and receiving of picked-up image signals and information such as camera control information with the image-pickup side communicator 169 in the camera 10 through the remote-control side communicator 241 (receiving means and sending means).

The remote-control side system controller 21 functions as a controller which integrally controls an operation of the entire remote control terminal. The remote-control side system controller 21 controls individual portions according to a predetermined control program on the basis of inputs from the remote-control side operating portion 22, and also generates various control information for controlling the camera 10.

In the remote-control side ROM 245 which is connected via the bus 23, the control program which is executed by the remote-control side system controller 21 and various data needed for the control, etc. are stored. In the remote-control side flash ROM 246, various setting information relating to operation of the remote control terminal 20 such as user setting information are stored.

The remote-control side SDRAM 244 is used as an arithmetic working region for the remote-control side system controller 21 and also used as a temporary storage region to stored received image signals, etc.

The remote-control side display controller 242 displays an image corresponding to received image signals which are received from the image-pickup side communicator 169 through the remote-control side communicator 241, the received signals being stored in the remote-control side SDRAM 244, in the remote-control side display 243.

Next, communication between the remote-control side communicator 241 and the image-pickup side communicator 169 will be described in detail. The image-pickup side communicator 169 continues to send image signals to the remote-control side communicator 241, without receiving confirmation from the remote-control side communicator 241, every time the image-pickup element 121 picks up an image. The remote-control side communicator (the second communicator) 241 stores the image signals in the remote-control side SDRAM 244 every time the image signals are received and displays the image signals in the remote-control side display 243 by the remote-control side display controller 242. If new image signals are received from the image-pickup side communicator 169 before displaying in the remote-control side display 243 is completed, the newly received image signals are ignored and the remote-control side display controller 242 continues with the current display process which is being executed. In such way, streaming replay is performed in the remote control terminal 20. The remote-control side system controller 21 sends control information and setting change information relating to the camera 10 by the remote-control side communicator 241 to the camera 10. The system controller 14 controls the camera 10 according to the control information received by the image-pickup side communicator 169 and changes the camera setting by changing various setting information in the flash ROM 168 according to the setting change information. For example, if a zooming operation is performed by the remote-control side system controller 21, the system controller 14 receives control information (information relating to the zooming direction and the zoom lens drive amount) relating to the zooming through communication. Then, the system controller 14 controls the magnification-varying lens driver 131 on the basis of the control information to perform the zooming. Further, for example, if recording image quality is changed by the remote-control side system controller 21, the system controller 14 receives setting change information (recording image quality change information) relating to recording image quality through communication and changes recording image quality setting by rewriting the information in the flash ROM 168.

In such way, information is communicated between the camera 10 and the remote control terminal 20, and confirmation of image signals and controlling of camera 10 can be carried out in the remote control terminal 20.

When the camera 10 sends picked-up image signals (image signals), which are picked up by the image-pickup elements 121 in a repeating repeatedmanner, by the image-pickup side communicator 169, the time information which the system controller 14 has is also sent by being attached to the image signals. The remote control terminal 20 sends back the time information (attached information) attached to the displayed image signals, when image displaying in the remote-control side display 243 by the remote-control display controller 242 is completed, to the camera 10 by the remote-control side communicator 241 separately from the above control information sent to the camera 10. Accordingly, the camera 10 sends the picked up image signals and time information of the time when the image signals are sent at the same time, and the remote control terminal 20 sends back the time information to the camera 10 every time the remote-control side controller 242 performs displaying of the received image signals. When the camera 10 received the above time information from the remote-control side communicator 241, the system controller 14 (calculator) calculates the communication delay time between the camera 10 and the remote control terminal 20 from the difference between the current time information in the camera 10 and the received time information. The calculated communication delay time is stored in the SDRAM 166.

Next, a flow of operations from when an object tracking command is performed in the remote control terminal 20 to when the image pickup apparatus performs tracking will be described. If a tracking command is performed through the remote-control side operating portion 22, the remote-control side tracking image generator (an extractor, or extraction means) 211 in the remote-control side system controller 21 imports image signals (a first image signal representing the captured image) stored in the remote-control side SDRAM 244 and generates a tracking image (a second image signal). In this embodiment, the remote-control side operating portion 22 is a touch panel, and a predetermined region whose center is at the coordinates where touched among the image signals is the tracking image. The remote-control side operating portion 22 may not be a touch panel and may adopt a system where the center coordinates of the tracking region or the region itself can be set by operation keys. The generated tracking image is sent to the image-pickup side communicator 169 by the remote-control side communicator 241 according to a command from the remote-control side system controller 21.

When the tracking image is received from the image-pickup side communicator 169, the system controller 14 assumes that the tracking command is given from the remote control terminal 20 and stores the tracking image in the SDRAM 166, and at the same time, the tracking signal processor 125 imports the tracking image. As described above, the tracking signal processor 125 generates a feature (characteristic information) including histograms of color information and a histogram of luminance information from the tracking image signals. As described above, the object region detector 126 performs the search process on the image signals (a third image signal) which are currently being picked up to search for the tracking object on the basis of the feature and specifies whether an object corresponding to the tracking object exists in a predetermined region in the picked-up image screen. If the tracking object exists in the predetermined region, the tracking region is decided on the basis of the position coordinates where the tracking object exists and the result thereof is sent to the system controller 14 to perform the AF and AE control (perform focusing or adjust an exposure). The position coordinates where the tracking object exists is stored in the SDRAM 166, and by using this information when detecting a tracking object region next time and thereafter, the area where the search process is to be performed to search for the tracking object can be limited. When specifying a tracking object region, the position coordinates to be stored in the SDRAM 166 is updated every time the position coordinates where the tracking object exists is updated.

Accordingly, by the tracking image being generated in the remote control terminal 20 and sent to the camera 10 and by the camera 10 specifying a region in which the tracking object exists on the basis of the tracking image, the tracking command by the remote control terminal 20 is performed. In such embodiment, accurate tracking can be performed with the tracking command from the remote control terminal 20 with no need to consider communication time lag, which has been a problem.

Next, an object tracking function will be described in detail. When a tracking (start) command to track an object is given by the operating portion 134 or the remote-control side operating portion 22, the tracking image generator 141 or the remote-control side tracking image generator 211 generates a tracking image by defining a predetermined range from the position information of when tracking was commanded. In this embodiment, the tracking image is generated by defining a predetermined range whose center is at the touched coordinates in the touch panel. The predetermined range needs to be at least in the size that enables to generate a feature (characteristic information) not frequently causing mis-tracking in the tracking control. The predetermined range may be a fixed range or may adopt a system where the predetermined range can vary according to user setting, etc. With respect to the generated tracking image, histograms of color information and a histogram of luminance information are generated by the tracking signal processor 125 and these histograms are the feature of the tracking image. In this embodiment, histograms of color and luminance are generated, however, only either one may be generated. In the object region detector 126, an image having the size similar to the size of the tracking image is generated from the image signals which are currently being picked up to be a tracking candidate image. Similarly to the tracking image, histograms of color and luminance are generated by the tracking signal processor 125 with respect to the tracking candidate image and these histograms are the feature of the tracking candidate image.

The object region detector 126 calculates the difference in each color information and the difference in luminance information between the features of the tracking image and the feature of the tracking candidate image, calculates the sum of the calculated values and stores the result. At the same time, the position information of the tracking candidate image is also stored. Further, matching is performed by sequentially generating tracking candidate images from the image signals which are currently being picked up, and the differences between the elements in the feature of each of the tracking candidate images and the elements in the feature of the tracking image are calculated and the sum of the differences are calculated. The smallest value among the sums of the differences between elements in the features and the position information of the tracking candidate image corresponding to the smallest value are stored by rewriting the previously stored information with them. If the sum of differences between the elements in the feature which is obtained at last is smaller than a predetermined value, the tracking candidate image corresponding to the sum is specified as the tracking object, and a predetermined region is set as the tracking region according to the stored position information. Here, a predetermined value relating to the sum of differences between the features is decided when the tracking operation is executed on the basis of a rate allowing to track the intended object and a rate allowing not to mis-track an object which is not intended. Accordingly, the tracking region is decided and the tracking is started.

Next, a tracking continuance method will be described. As for information for continuing the tracking, the tracking image and the position information where the tracking region is set are stored in the SDRAM 166. When continuing the tracking, matching between picked up signals and the tracking image is performed as described above by the object region detector 126 and the tracking signal processor 125 on the basis of the tracking image stored in the SDRAM 166 every time the image-pickup is performed. At this time, on the basis of the stored position information where the tracking region is set, a range of picked up signals where matching is to be performed is limited. By performing matching in a predetermined range with the position where the tracking region is set being the center, mis-tracking due to performing matching of unnecessary range can be prevented and the arithmetic time can be shortened. The predetermined range to perform matching is set, by designing the maximum distance the object intended to track can move within a picked-up image screen during the time period since the tracking continuance process is performed until the next tracking continuance process is to be performed, to a range which can cover the movement of the object if the object moves the maximum distance. If this range is large, an object can be tracked even if the object moves a great distance but mis-tracking can occur frequently. If this range is small, an object cannot be tracked if the object moves a great distance but mis-tracking does not occur frequently.

When matching is performed again to continue the tracking, as described above, if the sum of the differences between the elements in the features obtained at last is smaller than a predetermined value, it is determined that the tracking candidate image corresponding to the lastly obtained sum is the tracking object, and the tracking region is updated with the predetermined region from the position information of the tracking candidate image. Further, the position information stored in the SDRAM 166 is rewritten with the position information of the tracking candidate image at this time to be updated. At the time of next tracking continuance process, an appropriate matching region can be set by using the updated position information. In such way, continuance of tracking is carried out. The tracking continuance process does not need to be performed for every image-pickup. For example, it may be controlled so as to perform the tracking continuance process every predetermined times of image-pickup. As the interval of image-pickups between the tracking continuance processes becomes longer, an object cannot be tracked if the object moves a great distance. However, the processing time can be reduced.

Here, termination of the tracking will be described. If a tracking terminate command is given from the operating portion 134 or the remote-control side operating portion 22 when the tracking is ongoing, the system controller 14 terminates the tracking and returns to the non-tracking operation. For example, the AF region which was set for the tracking region returns to the AF region of normal setting when the tracking is terminated. Similarly, if a predetermined time period elapsed while not being able to specify the object intended to be tracked when the tracking is ongoing, the tracking is terminated. If a predetermined standby time period while the tracking object cannot be specified is long, the possibility of specifying the tracking object again and resuming with the tracking is high but the process to return to the normal state is to be delayed. If a predetermined standby time period while the tracking object cannot be specified is short, the reverse of the above case will happen.

As described above, processes to start, continue and terminate the tracking of an object are performed.

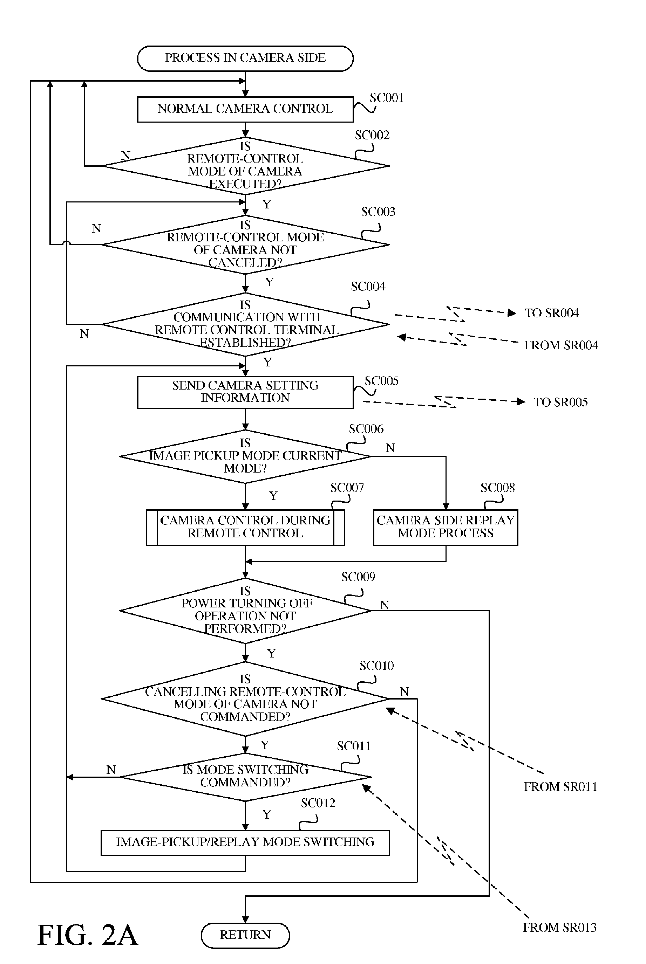

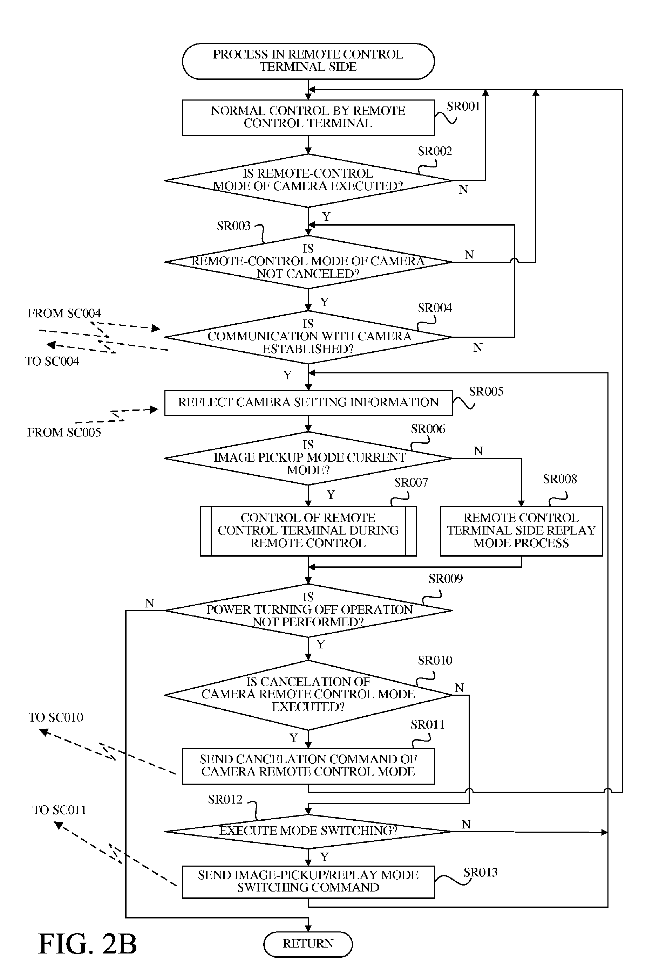

Next, referring to FIGS. 2A and 2B to FIG. 5, operations of the camera 10 and the remote control terminal 20 having the above configurations in this embodiment will be described in detail.

FIG. 2A is a flowchart illustrating a remote control process of a camera which is performed in the system controller 14 in the camera 10 in Embodiment 1. FIG. 2B is a flowchart illustrating a remote control process of a camera which is performed in the remote control controller 21 in the remote control terminal 20 in Embodiment 1. The flowchart of FIG. 2A illustrates an operation of the camera 10 during the remote control mode of the camera, and each process is indicated by "SC". The flowchart in FIG. 2B illustrates an operation of the remote control terminal 20 during the remote control mode of the camera, and each process is indicated by "SR".

First of all, processing performed in the camera will be described. Step SC001 indicates a control of the camera when the camera is not remote-controlled (hereinafter, referred to as a normal control of a camera), and the processing proceeds to step SC002 after this control is executed. Remote-controlling is not performed when the camera is under the normal controlling, therefore details of the normal controlling will be omitted. However, in the normal controlling, various controlling of the camera, displaying of picked up signals and the tracking command are performed only in the camera. In step SC002, whether the remote control mode of the camera is to be executed is determined.

If a command to execute the remote control mode of the camera is given in step SC002, the processing proceeds to step SC003, and if this command is not given in step SC002, the processing proceeds to step SC001. In step SC003, whether the remote control mode of the camera is canceled is determined. If it is determined that the remote control mode of the camera is not canceled, the processing proceeds to step SC004, and if it is determined that the remote control mode of the camera is canceled, the processing proceeds to SC001. If the remote control mode of the camera is canceled while communication with the remote control terminal 20 is being established in response to the command to execute the remote control mode of the camera, the normal controlling of the camera is performed in SC001.

In step SC004, communication with the remote control terminal 20 is established. A communication establishment command is sent to the remote control terminal 20, and if communication establishment enabling information is received from the remote control terminal 20 in return, it is assumed that communication is established. Then, communication establishment completion information is sent to the remote control terminal 20 and the processing proceeds to step SC005. If communication cannot be established due to time-out in response to the communication establishment command which was sent to the remote control terminal 20, the processing returns to step SC003 and whether the remote control mode of the camera is canceled is determined again.

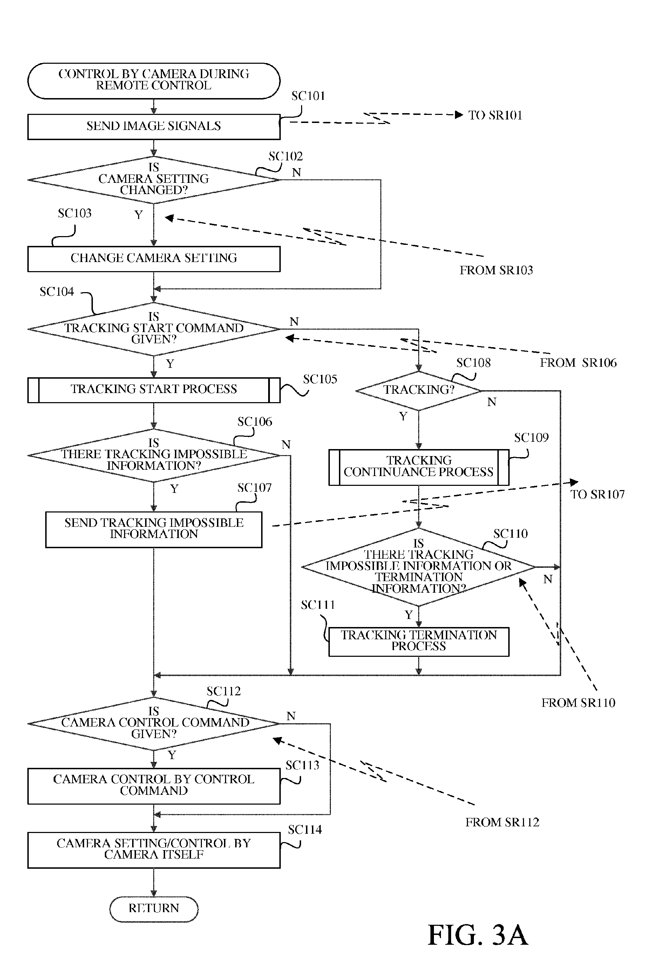

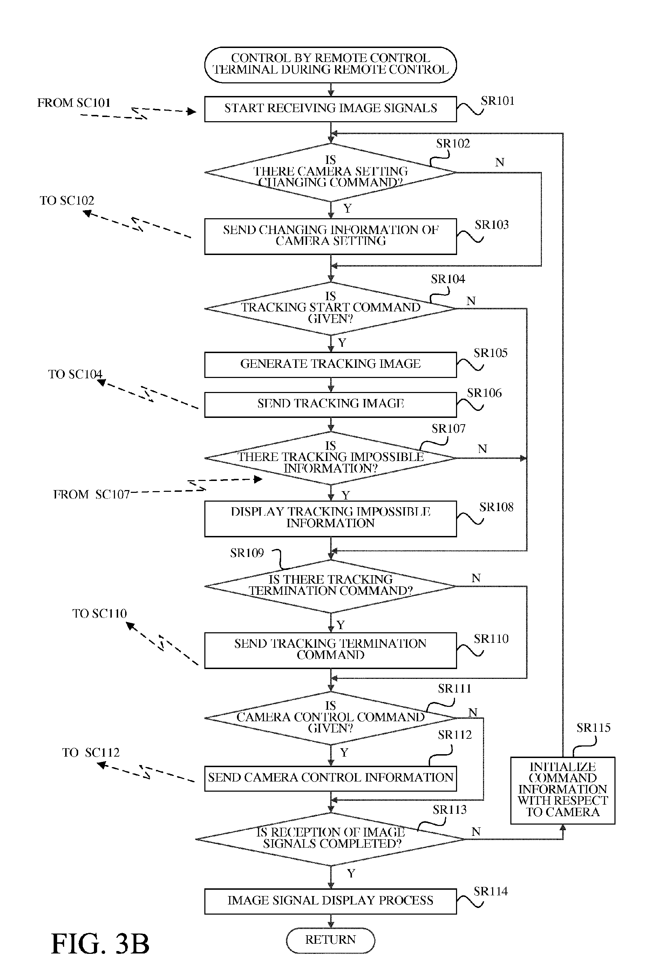

In step SC005, camera setting information is sent to the remote control terminal 20 in order to share the camera setting at the time when the communication was established with the remote control terminal. After executing the process of step SC005, the processing proceeds to step SC006. Further, although it will be described below in detail, the camera setting information is also sent to the remote control terminal 20 when a setting change command is given to the camera 10 from the remote control terminal 20 to share this setting. In step SC006, whether the current camera mode is the image pickup mode or the replay mode is determined. If it is determined that the current camera mode is the image pickup mode, the processing proceeds to step SC007 and if it is determined that the current camera mode is the replay mode, the processing proceeds to step SC008. Step SC007 will be described below with reference to FIGS. 3A and 3B.

In step SC008, processing in a replay mode is performed. A recorded video is replayed in the camera and the replayed video is also made to be displayed in the remote control terminal 20. Further, selecting of a video desired to be replayed and various commands (replay, stop, fast-forward, etc.) during the video replay are executed with respect to the camera 10 through the remote control terminal 20. The details will be omitted. After executing the process of step SC007 or step SC008, the processing proceeds to step SC009. In step SC009, whether the power is turned off is determined. If it is determined that the power is not turned off, the processing proceeds to step SC010, and if it is determined that the power is turned off, the processing ends. In step SC010, whether a cancelation command of the remote control mode of the camera is given by the remote control terminal 20 is determined. If it is determined that the cancelation command of the remote control mode of the camera is not given, the processing proceeds to step SC011. If it is determined that the cancelation command of the remote control mode of the camera is given, the processing returns to step SC001 and the normal control of the camera, not being remotely controlled, is performed.

In step SC011, whether a switching command between the image pickup mode and the replay mode is given by the remote control terminal 20 is determined. If it is determined that the mode switching command is given, the processing proceeds to step SC012, and if it is determined that the mode switching command is not given, the processing returns to step SC005. In step SC012, if the current mode is the image pickup mode, the camera setting is changed to the replay mode and if the current mode is the replay mode, the camera setting is changed to the image pickup mode, and thereafter, the processing returns to step SC005. In step SC005, switching between the image pickup mode and the replay mode and change in the camera setting information performed in step SC007 are shared with the remote control terminal and the operation is performed in the set mode.

Next, processing performed in the remote control terminal will be described. Step SR001 indicates a control of the remote control terminal when the remote control of a camera is not performed (hereinafter, referred to as a normal control of the remote control terminal). Because the remote control is not performed in the normal control of the remote control terminal, details are omitted. However, other functions (internet, music replay, video replay, etc.) equipped in the remote control terminal are executed. In step SR002, whether the remote control mode of the camera is executed is determined. If execution of the remote control mode of the camera is performed in step SR001, the processing proceeds to step SR003 and if the execution is not performed, the remote control terminal continues with the various processes executed in step SR001. In step SR003, whether the remote control mode of the camera is canceled is determined. If it is determined that the remote control mode is not canceled, the processing proceeds to step SR004, and if it is determined that the remote control mode is canceled, the processing returns to step SR001.

In step SR004, communication with the camera 10 is established. If a communication establishment command is received from the camera 10, communication establishment enabling information is sent to the camera 10, and if communication completion information is received from the camera 10 again in return, it is assumed that the communication is established and the processing proceeds to step SR005. If the communication establishment command is not received from the camera 10 and if communication cannot be established due to time-out, the processing returns to step SR003 and whether the remote control mode of a camera is canceled is determined again. If it is determined that the cancelation command of the remote control mode of a camera is given, the processing returns to step SR001 and various controls of the remote control terminal 20 are resumed. In step SR005, in order to reflect the setting of the camera 10 at the time when the communication was established in the remote control terminal, setting information is received from the camera 10 to set the setting similar to the received setting information in the remote control terminal.

For example, whether the current focus mode of the camera is AF or MF is received and the same setting is set so as to perform controlling such as graying out an icon for manually controlling the focus at the time of AF mode. After executing the process of step SR005, the processing proceeds to step SR006.

Further, although it will be described in detail below, when a setting change is commanded to the camera 10 from the remote control terminal 20, in order to share such setting, the setting information of the camera 10 is also received again and the setting is reflected in the remote control terminal 20. In step SR006, whether the current camera mode is the image pickup mode or the replay mode is determined. If it is determined that the current camera mode is the image pickup mode, the processing proceeds to step SR007 and if it is determined that the current camera mode is the replay mode, the processing proceeds to step SR008.

Step SR007will be described below with reference to FIGS. 3A and 3B. In step SR008, processing of replay mode is performed. Selecting of a video desired to be replayed and various commands (replay, stop, fast-forward, etc.) during the video replay are executed with respect to the camera 10 through the remote control terminal 20, and at the same time, the video replayed in the camera 10 is displayed. Here, details are omitted. After executing the process of step SR007 or step SR008, the processing proceeds to step SR009.

In step SR009, whether the power is turned off is determined. If it is determined that the power is not turned off, the processing proceeds to step SR010, and if it determined that the power is turned off, the processing ends. In step SR010, whether a cancelation command of the remote control mode of the camera is executed in the remote control terminal 20 is determined. If it is determined that the cancelation command of the remote control mode of the camera is executed, the processing proceeds to step SR011, and if it is determined that the remote control mode of the camera is not executed, the processing proceeds to step SR012.

In step SR011, the canceling command of the remote control mode of the camera is sent to the camera 10 and at the same time, the processing returns to step SR001 to perform the normal control of the remote control terminal. In step SR012, whether the switching command between the image pickup mode and the replay mode is executed in the remote control terminal 20 is determined. If it is determined that the mode switching command is executed, the processing proceeds to step SR013, and if it is determined that the mode switching command is not executed, the processing returns to step SR005 and the remote control terminal continues with the processing of the remote control mode of the camera. In step SR013, the switching command of the camera mode is sent to the camera 10 and the processing returns to step SR005. In step SR005, the switching between the image pickup mode and the replay mode is shared with the remote control terminal and operation is carried out in the set mode.

Next, a control of the camera during the remote control of step SC007 in FIG. 2A and a control of the remote control terminal during the remote control of step SR007 will be described with reference to the flowcharts illustrated in FIGS. 3A and 3B.

The flowchart in FIG. 3A illustrates the control of the camera during the remote control, and the flowchart in FIG. 3B illustrates the control of the remote control terminal during the remote control.

First, processing performed in the camera will be described. In step SC101, image signals are sent to the remote control terminal 20 and the processing proceeds to step SC102. In the camera side, image signals are sent without confirming their reception at the remote control terminal 20. In step SC102, whether the camera setting is changed through the remote control terminal 20 is determined. If it is determined that the camera setting is changed, the processing proceeds to step SC103, and if it is determined that the camera setting is not changed, the processing proceeds to step SC104. In step SC103, the camera setting changed through the remote control terminal 20 is reflected in the camera 10 and the processing proceeds to step SC104. For example, if a recording image quality is changed in the remote control terminal, the changed setting of the recording image quality is reflected in the camera in step SC103.

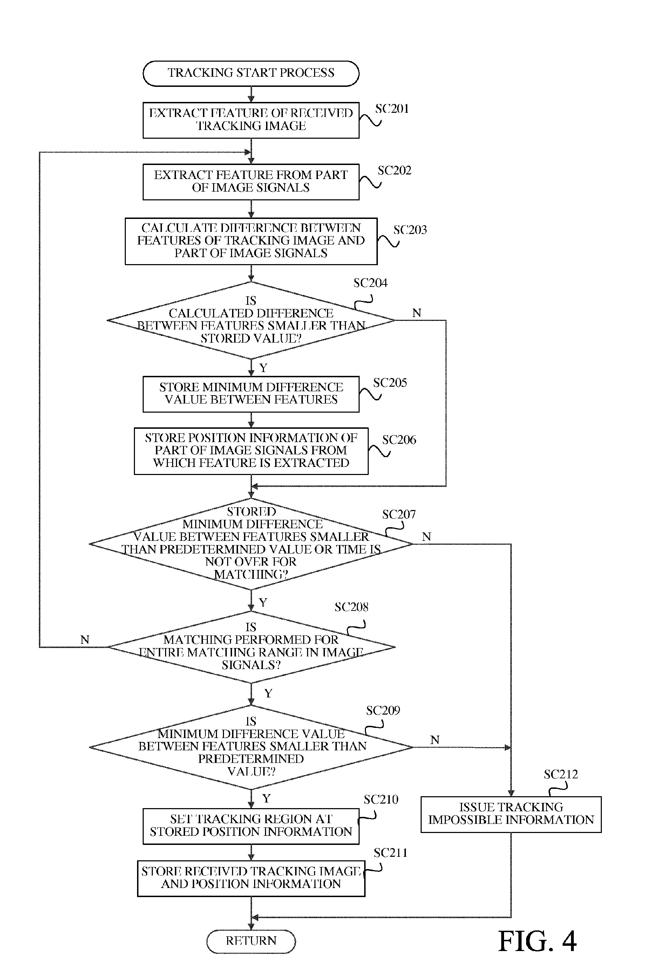

In step SC104, whether a tracking start command is given by the remote control terminal 20 is determined. If it is determined that the tracking start command is given, the processing proceeds to step SC105, and if it is not, the processing proceeds to step SC108. In this embodiment, if a tracking image is received, it is assumed that the tracking start command is given. In step SC105, a tracking start process is performed on the basis of the received tracking image and the processing proceeds to step SC106. The process of step SC105 will be described below with reference to FIG. 4. In step SC106, whether the tracking was successful in step SC105 is determined. If it is determined that the tracking was not successful, the processing proceeds to step SC107 and if it is determined that the tracking was successful, the processing proceeds to step SC112 and switches to another process other than the tracking process. In step SC107, with the assumption that the tracking is not successful, tracking impossible information is sent to the remote control terminal 20. Whether the tracking is successful is determined based on the tracking impossible information which indicates successful/unsuccessful of tracking with 1 bit and which is issued in step SC105.

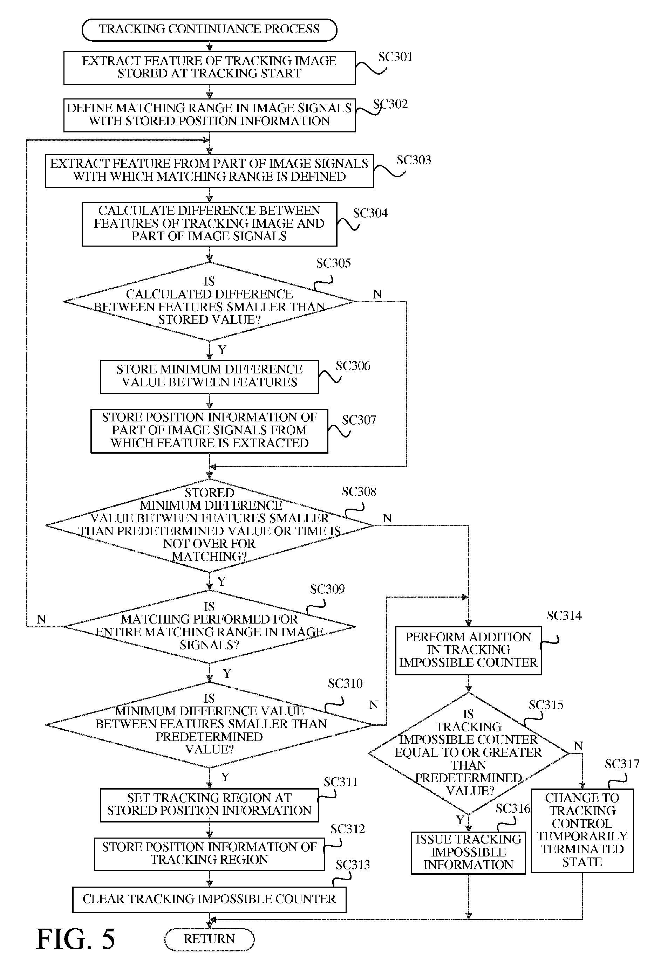

Next, in step SC108, which is the step the processing proceeds if it is determined the tracking start command is not given in step SC104, whether tracking is currently being performed is determined. If it is determined that the tracking is being performed, the processing proceeds to step SC109. If not, the processing proceeds to step SC112 and switches to another process other than the tracking process. In step SC109, which is the step the processing proceeds when tracking is currently being performed, the tracking continuance process is performed and the process proceeds to step SC110. The tracking continuance process will be described below with reference to FIG. 5.

In step SC110, whether the tracking impossible information is present in step SC109 or whether tracking stop is commanded from the remote control terminal 20 is determined. If either of the above applies, the processing proceeds to step SC111. If not, the processing proceeds to step SC112 and switches to another process other than the tracking process. In step SC111, a tracking termination process (a tracking stop process) is performed, and then, the processing proceeds to step SC112 and switches to another process other than the tracking process. If the tracking cannot be continued, i.e. the tracking object cannot be specified or if a user stops the tracking, the tracking is terminated and the camera returns to the normal image pickup state. In this embodiment, the normal image pickup state is a state where a frame for adjusting AF and AE is set at the center of the screen and not at the tracking region. The normal image pickup state is not limited to the configuration of this embodiment and may adopt other configurations as long as it is a state where tracking is not performed.

Next, in step SC112, which is the step where the processing proceeds after the processes relating to the tracking are performed, whether camera control through the remote control terminal 20 is commanded. If it is determined that the camera control by the remote control terminal 20 is commanded, the processing proceeds to step SC113, and if not, the processing proceeds to step SC114. In step SC113, the camera is controlled according to camera control commands from the remote control terminal 20 and the processing proceeds to step SC114. As an example of a process performed in step SC112 and step SC113, zooming is performed according to the zooming command if the remote control terminal 20 commands to perform zooming. In step SC114, the camera setting and the control are performed by the camera itself and the processing ends. In step SC114, a change in the camera setting and the camera control commands made by operating the camera itself are accepted, and the camera 10 is controlled according to them. The camera control which is performed without following a user's command such as AF is also performed at this time. Here, details are omitted.

Next, processing performed in the remote control terminal will be described. In step SR101, reception of image signals from the camera 10 is started and the processing proceeds to step SR102. Although displaying of the received image signals is performed in the after-mentioned step SR114, processes from step SR102 to step SR113, which are described hereinafter, are described under assumption that image signals are already displayed in step SR114 in the control of the remote control terminal during a previous remote control. In step SR102, whether changing of camera setting is commanded by a user in the remote control terminal 20 is determined. If it is determined that setting change is commanded, the processing proceeds to step SR103, and if not, the processing proceeds to step SR104. In step SR103, the change information of the camera setting is sent to the camera 10.

Next, in step SR104, whether tracking start is commanded in the remote control terminal 20 is determined. If it is determined that the tracking start is commanded, the processing proceeds to step SR105, and if not, the processing proceeds to step SR109. In this embodiment, image signals are displayed in the remote control terminal 20 and at the same time, the tracking start is commanded if an object is touched on the touch panel on which touching operation can be performed. In step SR105, a tracking image of a tracking object is extracted and generated from the image signals which are currently being displayed in the remote control terminal 20 and the processing proceeds to step SR106. The extraction range of the tracking image is a predetermined range whose center is at the touch coordinates where the object is touched. In step SR106, the tracking image is sent to the camera 10 and the processing proceeds to step SR107. The present embodiment involves performing the tracking start command remotely by sending the tracking image. Conventionally, in a case where object position information was communicated (sent) as information for remotely commanding to start tracking, mis-tracking has been a problem because the object which is intended to be tracked is not at the communicated (sent) object position due to communication time lag as described above. In view of such problem, in this embodiment, a tracking image is sent and the tracking object is specified by performing pattern matching. Therefore, the object which is remotely specified by a user can be tracked accurately.

Next, in step SR107, whether tracking impossible information, which is sent from the camera 10 when tracking was unsuccessful due to failing in pattern matching as a result of the tracking start process performed in step SC105 in the camera side, is received is determined. If it is determined that the tracking impossible information is received, the processing proceeds to step SR108, and if not, the processing proceeds to step SR109. In step SR108, in order to notify a user that tracking was not successful in the camera side, an indication that the tracking was not successful is displayed and the processing proceeds to step SR109. By displaying an indication that the tracking was not successful, a user can be urged to perform the tracking command again. In step SR109, whether termination of tracking is commanded by the remote control terminal 20 is determined. If it is determined that termination of tracking is commanded, the processing proceeds to step SR110, and if not, the processing proceeds to step SR111. The tracking termination command is an operation performed when a user wishes to terminate the tracking when the tracking is currently being performed. By the user touching a tracking stop icon displayed in the remote control terminal 20, the tracking termination command is performed. In step SR 110, the tracking termination command is sent to the camera 10 and the processing proceeds to step SR111.

In step SR111, whether camera control through the remote control terminal 20 is commanded is determined. If it is determined that camera control through the remote control terminal 20 is commanded, the processing proceeds to step SR112, and if not, the processing proceeds to step SR113. In step SR112, information on camera control performed in the remote control terminal 20 is sent to the camera and the processing proceeds to step SR113. For example, if zooming is performed by the remote control terminal 20, control information so as to perform zooming is sent to the camera 10. In step SR113, whether reception of the image signals which are started to be received in step SR101 is completed is determined. If it is determined that the reception is completed, the processing proceeds to step SR114, and if it is determined that the reception is not completed, the processing proceeds to step SR115. In step SR114, a display process of the image signals whose reception is completed is performed and the processing ends. In step SR115, various command information with respect to the camera 10 performed from step SR102 to step SR112 are initialized (in a state where there is no command) and the processing returns to step SR102 to perform the processing again from step SR102.

Although the image signals are sent to the remote control terminal 20 every time image-pickup is performed in the camera side, the remote control terminal 20 cannot necessarily display all of the image signals, and whether the image signals are displayed depends on the processing ability of the remote control terminal 20 and the circuit condition. As the processing ability of the remote control terminal 20 becomes lower, the image signals are displayed at even more delayed cycle with respect to the display cycle in the camera. Even while the image signals which are started to be received in step SR101 continue to be received, changing of camera setting, performing of the camera control and the tracking start command with respect to the image which is currently being displayed can be performed in the remote control terminal 20. That is, until reception is completed in step SR113, processes from step SR102 to step SR112 can be performed via the process of step SR115. When reception of the image signals is completed, the image signals are displayed in the remote control terminals 20 in step SR114 and reception of image signals is started again in step SR101 after the control of the remote control terminal of the next remote control is performed. While the image signals are being received again, commands of various processes with respect to the image signals which are currently being displayed are accepted. At the starting stage of receiving of the image signals in step SR101, such as just after the remote controlling is started and none of the image signals is displayed yet, the processes of steps SR102, SR104, SR107, SR109 and SR111 are all determined as N. In such way, various steps are skipped without accepting various controlling commands. After the image signals are displayed for the first time in step SR114, various controlling commands from step SR102 to step SR112 are accepted.

Next, the tracking start process of step SC105 in FIG. 3A will be described by using the flowchart of FIG. 4.

In step SC201, the feature (the characteristic information) of the tracking image which is received from the remote control terminal 20 is extracted and the processing proceeds to step SC202. In step SC202, the feature is extracted (calculated) from a part of picked-up image signals which are currently being picked up in the camera. The features extracted in step SC201 and in step SC202 are histograms of color information and histograms of luminance information as described above. The size of a portion extracted from the picked-up image signals in step SC202 is similar to the size of the tracking image which is received from the remote control terminal 20. Every time the processing returns to step SC202 by the after-mentioned SC208, matching is performed by sequentially changing the position to extract in the picked-up image signals from within a predetermined range of the picked-up image signals. Here, the larger the range for performing matching, the higher the possibility of finding the tracking object, but the possibility of miss-tracking also becomes high. As for the changing method of the extraction position, the extraction position is changed with respect to each row, and when the extraction of one row is finished, then the extraction is performed with respect to the next row which next in line. Of course, lines may be prioritized when performing the extraction. As for the extraction range, extracted images may be overlapped or may not be overlapped, this may be determined according to the tracking accuracy. If the extracted images are to be overlapped, for example, in a case where an extracted image is generated every time shifted by 1 pixel, tracking accuracy improves because matching is performed precisely. On the other hand, if a range adjacent to one extracted image is set as another extracted image so that the extracted images do not overlap, for example, a calculation amount for matching is reduced but the tracking accuracy is less accurate.

Next, in step SC203, the difference between the features (the characteristic information) extracted in step SC201 and the feature extracted in step SC202 are calculated and the processing proceeds to step SC204. In step SC204, whether the difference between features calculated in step SC203 is smaller than the difference value between the features which is currently stored is determined. If it is determined that the calculated difference is smaller than the currently stored difference value, the processing proceeds to step SC205, and if not, the processing proceeds to step SC207. As described above, the difference between the features of the tracking image and the picked-up image signals is obtained, and here, the smaller the difference, the better the matching. Therefore, whether the difference between the features is the smallest so far is determined in step SC204, and the minimum value is to be stored by performing the after-mentioned process. If a difference between features is not yet held in step SC204, the processing inevitably proceeds to step SC205.

In step SC205, the minimum value of the calculated differences between the features is stored and the processing proceeds to step SC206. In step SC206, the center position coordinates in the picked-up image signals which are cut out in step SC202 are stored and the processing proceeds to step SC207. This center position information is to be used for setting a tracking region if the tracking object is specified. Although the center position coordinate is used in this embodiment, it is needless to say that, for example, coordinates in the upper left of a region may be used and not the center position.

Next, in step SC207, whether the minimum value of the differences between the features stored in step SC205 is larger than a predetermined value and whether a time limit has been exceeded (i.e. it is time over) for performing pattern matching are determined. If it is determined that the stored minimum difference value between the features is smaller than the predetermined value or if it is determined that time is not yet over, the processing proceeds to step SC208. If it is determined that the stored minimum difference value between features is larger than the predetermined value and that time is over, the processing proceeds to step SC212. In a case where a pattern having small difference between the features does not occur even spending a long time for pattern matching, the possibility is high that the object which is intended to be tracked is not in the range for performing the matching. Therefore, a time limit is set for the pattern matching, and a process where the matching is terminated if the minimum difference value between the features is larger than a predetermined value and if the time limit is passed is performed. Such time limit can vary according to the minimum difference value between the features which is stored, and it can be set that the larger the minimum value, the faster the time limit be over.

Next, in step SC208, whether the extraction of image signals performed in step SC202 is performed with respect to all of matching ranges is determined. If it is determined that the extraction is performed with respect to all of matching ranges, the processing proceeds to step SC209. If it is determined that the extraction is not performed with respect to all of matching ranges, the processing returns to step SC202 and the camera continues with the pattern matching process which is from step SC202 to step SC207.

In step SC209, the pattern matching is ended and whether the minimum difference value between the features stored at last is smaller than a predetermined value is determined. If it is determined that the minimum value is smaller than the predetermined value, the processing proceeds to step SC210, and if not, the processing proceeds to step SC212. In step SC210, with the assumption that the tracking object is specified, a tracking region whose center is at the position coordinates of the picked-up image signal stored in step SC208 is set and the processing proceeds to step SC211. In step SC211, the tracking image which is received from the remote control terminal 20 and the position coordinates of the picked-up image signal are stored and the processing ends. The stored tracking image and position coordinates of the picked-up image signal are used when performing the after-mentioned tracking continuance process. In step SC212 to which the processing proceeds when the minimum difference value between features is larger than the predetermined value and time is over for performing the matching, it is assumes that the tracking object is not specified and the tracking impossible information is issued, and thereafter, the processing ends. When the tracking impossible information is issued, an indication that the tracking object was not specified is sent to the remote control terminal 20 in step SC107 of FIG. 3A.

As described above, the tracking object is specified and the tracking region is set by performing the pattern matching on the basis of the tracking image which is received from the remote control terminal 20. When the tracking command is performed through the remote control terminal 20, the image signals themselves are communicated (sent) instead of the position information of a specified image to perform the pattern matching. Therefore, mis-tracking of the object due to communication time lag can be prevented and the tracking object can be specified more accurately. By the camera 10 performing the control such as AF and AE with respect to the tracking region, preferable focus and exposure can be easily set with respect to the object which a user wishes to track.

Next, the tracking continuance process of step SC109 in FIG. 3A will be described by using the flowchart of FIG. 5.

In step SC301, a feature (characteristic information) is extracted from the tracking image which is stored in step SC211 in the tracking start process illustrated in FIG. 4 and the processing proceeds to step SC302. In step SC302, the range for performing matching is defined from the position information stored in step SC211 in the tracking start process illustrated in FIG. 4 or in the after-mentioned step SC312 and the processing proceeds to step SC303. By setting the matching range by setting the previously matched position information as the center, the tracking object can be specified more easily.

In step SC303, an image having the size same as the size of the tracking image used in step SC301 is extracted from the picked-up image signals within the matching range set in step SC302 and the feature is extracted therefrom, and thereafter, the processing proceeds to step SC304. In step SC304, the difference between the features extracted in step SC301 and step SC303 is calculated and the processing proceeds to step SC305. In step SC305, whether the difference between the features which are calculated up to this point is smaller than the difference value between the features currently stored is determined. If it is determined that the calculated difference is smaller than the currently stored difference value, the processing proceeds to step SC306, and if not, the processing proceeds to step SC308. In step SC306, with the assumption that the difference between feature values which is calculated is the smallest, this value is stored and the processing proceeds to step SC307. In step SC307, the position information of the picked-up image signals which are extracted in step SC303 is stored and the processing proceeds to step SC308.

At the time of determination of step SC305, if the minimum difference value between the features is not yet stored in step SC306, the processing inevitably proceeds to step SC306. Next, in step SC308, whether the minimum value of the differences between the features stored in step SC306 is larger than a predetermined value and whether it is time over for performing the pattern matching are determined. If it is determined that the stored minimum difference value between the features is smaller than the predetermined value or if it is determined that time is not yet over, the processing proceeds to step SC309. If it is determined that the stored minimum difference value between the features is larger than the predetermined value and that time is over, the processing proceeds to step SC314. The detail of the process of step SC308 is omitted because it is similar to the process described with respect to step SC207 of FIG. 4.

In step SC309, whether the matching is performed with respect to all of matching ranges set in step SC302 is determined. If it is determined that the matching is performed with respect to all of matching ranges, the processing proceeds to step SC310, and if not, the processing returns to step SC303 and the pattern matching process is continued. In step SC310, whether the minimum difference value between the features stored in step SC306 is smaller than a predetermined value as a result of the pattern matching is determined. If it is determined that the minimum difference value is smaller than the predetermined value, the processing proceeds to step SC311, and if not, the processing proceeds to step SC314. In step SC311, with the assumption that the tracking object is specified, the tracking region is set to the range whose center is the position information of the picked-up image signals stored in step SC307 and the processing proceeds to step SC312.

In step SC312, the position information of the tracking region set in step SC311 is stored and the processing proceeds to step SC313. The coordinate information stored in step SC312 is used in step SC302 during the next tracking continuance process. In step SC313, the tracking impossible counter is cleared and the processing ends. The tracking impossible counter will be described in the description of the after-mentioned step SC314 to step SC317.

In such way, by repeatedly performing the pattern matching with respect to the picked-up image signals which are sequentially picked up, tracking regions are sequentially specified and the tracking is continued. Next, in step SC314 which the processing proceeds if the minimum difference value between the features is larger than the predetermined value and if time is over for matching, the tracking impossible counter is added and the processing proceeds to step SC315. The tracking impossible counter is a counter for counting the number of times the tracking object was not specified in a row when the tracking continuance process is carried out. In step SC315, whether the tracking impossible counter indicates a value which is equal to or greater than a predetermined number of times is determined. If it is determined that the tracking impossible counter indicates a value which equals to or greater than a predetermined number of times, the processing proceeds to step SC316, and if not, the processing proceeds to step SC317.

In step SC316, with the assumption that the tracking object is not specified, the tracking impossible information is issued and the processing ends. If the tracking impossible information is issued, the tracking termination process is performed by step SC111 in FIG. 3A. In step SC317, the camera is switched to a state where the tracking control is temporarily terminated and the processing ends. The state where the tracking control is temporarily terminated is a state where the camera control is not performed with respect to a tracking control region and controls such as AF and AE are temporarily terminated.

Here, step SC314 to step SC317 will be described in detail. At the time of the tracking continuance process, there is a possibility that the tracking object can be specified again even if it cannot be specified temporarily. For example, a case where the object which was being tracked comes back in a frame again after being outside of the frame once or a case where another object cuts across in front of the object which was being tracked can be suggested. In consideration of such cases, a waiting time is set so that the object can be specified again even if it cannot be specified temporarily. This waiting time corresponds to the tracking impossible counter, and the tracking impossible information is not issued in step SC316 until the tracking impossible counter be equal to or greater than a predetermined number of times.

However, if the tracking object is not specified, the AF and AE controls cannot be performed with respect to the tracking region which is currently set. Therefore, such control is temporarily terminated in step SC317. In such way, even if the tracking object cannot be specified temporarily, tracking can be continued when the tracking object appears again.

As described above, when the tracking control is to be performed by the tracking command given from the remote control terminal 20, the system controller 14 performs the tracking control by using the tracking image generated by the remote-control side tracking image generator 211 in the remote control terminal 20. The tracking image is stored in the remote-control side SDRAM 244 and is extracted from image data which are displayed by the remote-control side display controller 242. The remote control terminal 20 sends the tracking image to the camera 10 through the remote-control side communicator 241, and the camera 10 performs the tracking control by specifying the tracking region by the tracking signal processor 125 and the object region detector 126 on the basis of the tracking image.

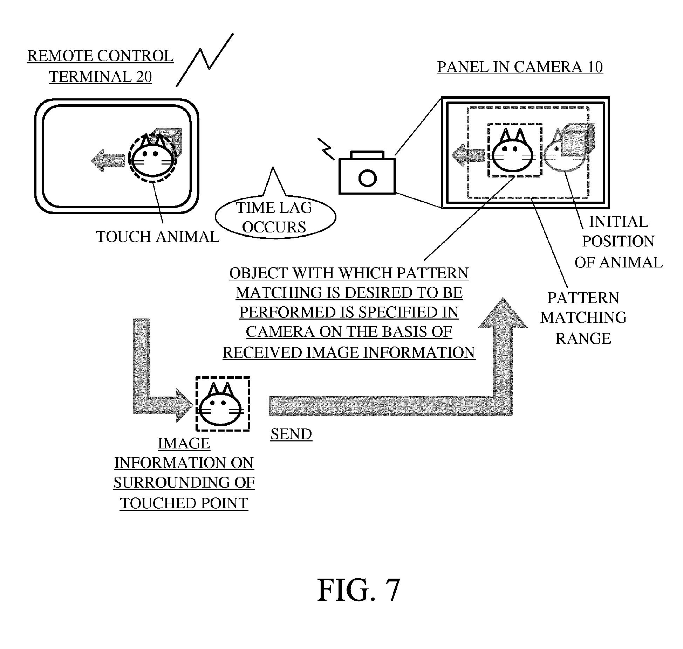

In this embodiment, a tracking image whose center is at the coordinates where the tracking command is performed is sent as information to be sent to the camera 10 from the remote control terminal 20 when tracking command is given. The tracking image includes a feature (characteristic information) which is at least one of histograms of color information and a histogram of luminance information. Conventionally, the coordinates itself where tracking was commanded was sent from the remote control terminal as illustrated in FIG. 6, and there has been a problem that an object other than the object a user intends to track is tracked by mistake due to communication time lag. Alternatively, there has been a problem that a user needs to perform tracking command at a position by taking communication time lag into consideration in view of the above problem. On the other hand, in this embodiment, the tracking image whose center is at the coordinates (position information) where the tracking command was performed is sent as illustrated in FIG. 7 and a tracking object region is specified by performing the pattern matching in the camera side. Thereby, regardless of the influence of communication time lag, the object which a user intends to track can be tracked accurately and also a user can perform the tracking command not worrying about the communication time lag.

### [EMBODIMENT 2]

Hereinafter, Embodiment 2 of the present invention will be described with reference to the appended drawings.

The description of the apparatus configuration is omitted because the configuration is similar to that described with reference to FIG. 1 in Embodiment 1. However, the remote-control side communicator 241 in this embodiment sends the position information (coordinate information) where the tracking command is performed with respect to image signals in addition to the tracking image which is generated by the remote-control side tracking image generator 211 when the tracking command is performed through the remote-control side operating portion 22. In such system where coordinate information where the tracking image was specified is sent in addition to the tracking image, the tracking object can be specified more accurately when the tracking control command is performed through the remote control terminal 20. Details will be described below.

With respect to the operations of the camera 10 and the remote control terminal 20 having the configurations illustrated in FIG. 1 in this embodiment, the processes described by using FIGS. 2A and 2B and FIG. 5 in Embodiment 1 are similarly applied. Therefore, their descriptions are omitted.

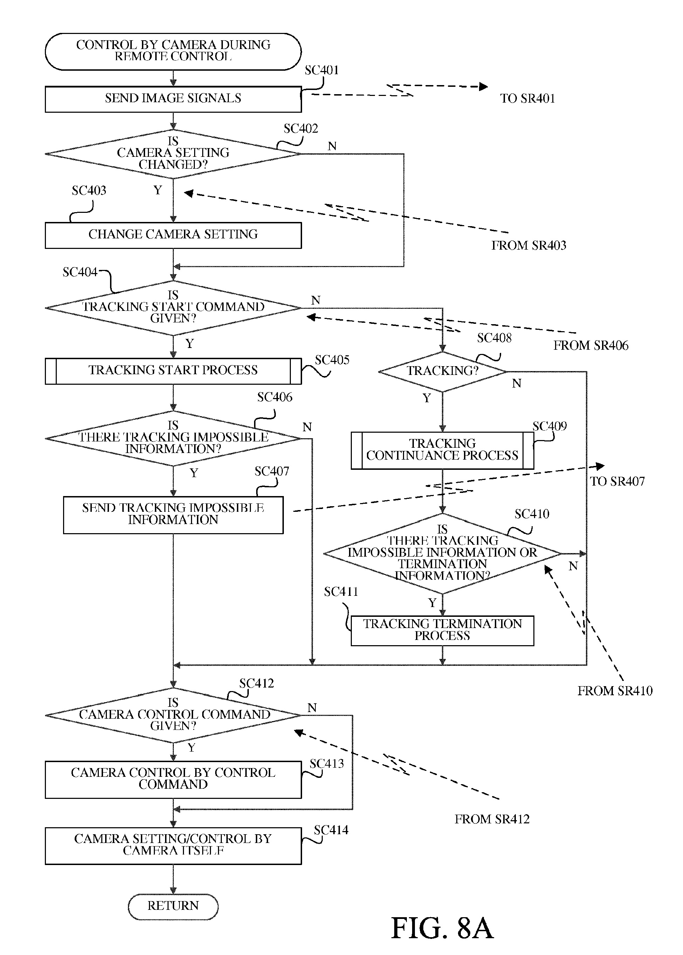

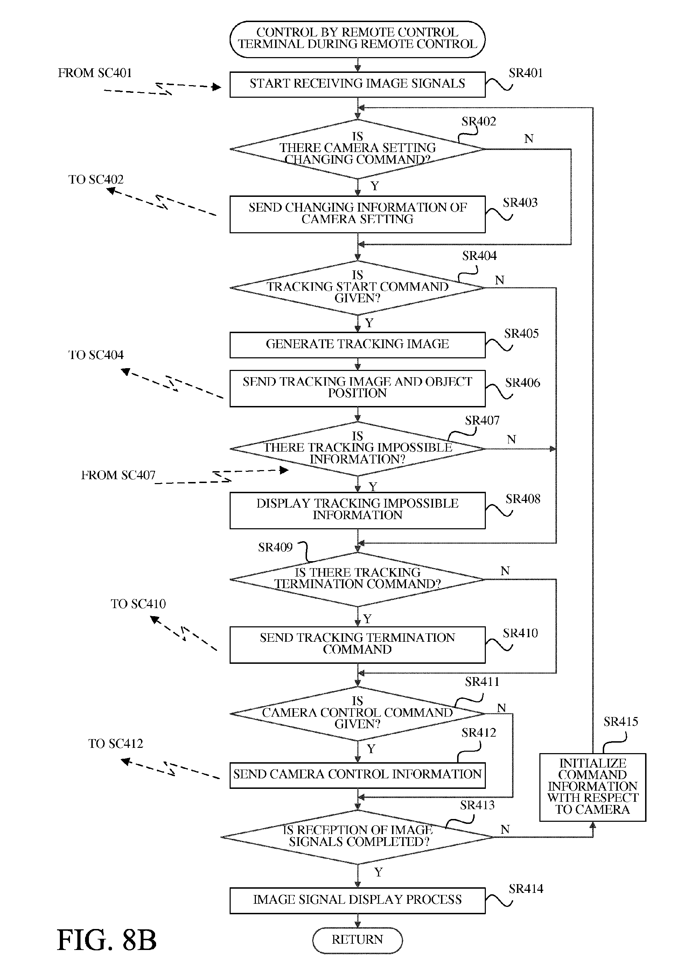

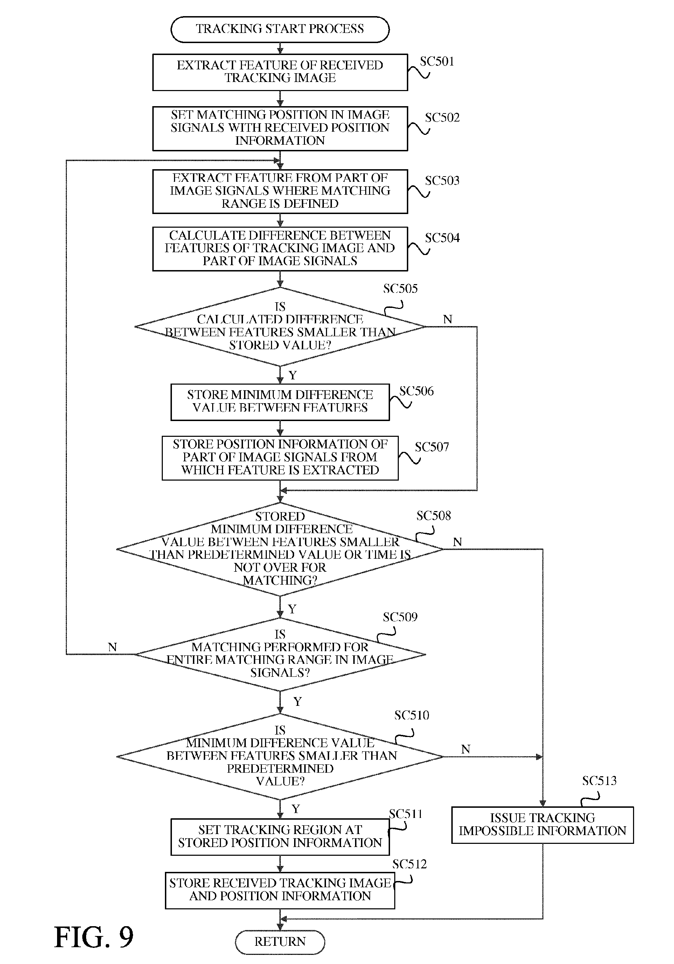

Operations of the camera 10 and the remote control terminal 20 having the above configurations in this embodiment will be described in detail with reference to FIGS. 8A, 8B and 9.

FIG. 8A is a flowchart of a control of the camera during the remote control of step SC007 in FIG. 2A in Embodiment 2, and FIG. 8B is a flowchart of a control of the remote control terminal during the remote control of step SC007 in FIG. 2B in Embodiment 2. The flowchart in FIG. 8A illustrates the control of the camera during the remote control, and the flowchart in FIG. 8B illustrates the control of the remote control terminal during the remote control.

First, the processing performed in a camera will be described. Descriptions of processes from step SC401 to step SC403 are omitted because they are similar to the processes from step SC101 to step SC103 in FIG. 3A. In step SC404, whether the tracking start command is performed in the remote control terminal 20 is determined. If it is determined that the tracking start command is performed, the processing proceeds to step SC405, and if not, the processing proceeds to step SC408. In step SC104 of FIG. 3A, it is determined that a tracking start command is given if a tracking image is received from the remote control terminal 20. However, in step SC404 of this embodiment, information corresponding to the center coordinates of the tracking image is further received. Details will be described below when describing the processing in the remote-control side. Descriptions of processes from Step SC405 to step SC414 are omitted because they are similar to the processes from step SC105 to step SC114 in FIG. 3A.

Next, processing performed in the remote control terminal will be described. Descriptions of processes from Step SR401 to step SR405 are omitted because they are similar to the processes from step SR101 to step SR105 in FIG. 3B. Step SR406 which is performed after the tracking start command is performed by a user in step SR404 and a tracking image is extracted from the image signals which are being displayed in step SR405 on the basis of the coordinate information where the tracking start command was performed will be described. In step SR406, in addition to the tracking image which is extracted in step SR405, coordinate information of the image signal where the tracking start command was performed is further sent. As described above, in this embodiment, by including not only the tracking image but also the coordinate information where the tracking image was specified in information to be sent, the tracking object can be specified more accurately when performing the tracking start process which will be described below with reference to FIG. 9. Descriptions of processes from step SR407 to step SR415 are omitted because they are similar to the processes from step SR107 to step SR115 in FIG. 3B.

Next, the tracking start process which is performed in step SC405 of FIG. 8A in Embodiment 2 will be described by using the flowchart illustrated in FIG. 9. The description of step SC501 is omitted because it is the same process as step SC201 in FIG. 4. In step SC502 to which the processing proceeds after extracting the feature (the characteristic information) of the tracking image which is received in step SC501, the center position in the range of picked-up image signals where matching is to be performed is determined on the basis of the coordinate information where the tracking image was specified and the processing proceeds to step SC503. Descriptions of processes from step SC503 to step SC513 are omitted because they are similar to the processes from step SC202 to step SC212 in FIG. 4.

In the tracking start process, if the range for performing the pattern matching can be set appropriately when performing the pattern matching, a possibility of specifying the object by the pattern matching can be improved. With respect to the range for performing the pattern matching, it is preferred to set the matching range at the position whose center is the tracking position considering that the object which is intended to track exists near the position specified in the remote control terminal. However, in Embodiment 1, the position information specified in the remote control terminal 20 cannot be recognized in the camera side. In view of this, in the system where the coordinate information where the tracking image was specified is sent as this embodiment, which position in the image signals a user specified in the remote control terminal can be recognized in the camera side. If which position in the image signals was specified can be recognized in the camera side, the center position of the matching range can be set to the specified position.

In such way, by further sending the position information where the tracking command was performed in the remote-control side operating portion 22 in the remote control terminal 20 through the remote-control side communicator 241, the camera 10 can know the position information where the tracking command was performed. By knowing this position information, the camera 10 can assess roughly at which position in the picked-up image signals the object which a user intends to track exists. By the camera 10 setting the center position of the pattern matching range on the basis of the position information, the chances that the object which is intended to be tracked exists in the matching range are increased and it is more likely that the tracking object can be specified. Further, because the pattern matching is prevented from being performed in a range where it is less likely that the tracking object exists, mis-tracking can be limited.

### [EMBODIMENT 3]

Hereinafter, Embodiment 3 of the present invention will be described with reference to the appended drawings.

The description of the apparatus configuration is omitted because the configuration is similar to that described with reference to FIG. 1 in Embodiment 1. In Embodiment 1, as the information to be communicated, the camera 10 repeatedly sends picked-up image signals by the image-pickup side communicator 169. The remote control terminal 20 sends the tracking image which is generated by the remote-control side tracking image generator 211 when the tracking command is performed through the remote-control side operating portion 22 by the remote-control side communicator 241. However, the information to be communication in this embodiment is not just the above described information. In this embodiment, time information which the system controller 14 has is also sent by being attached to the picked-up image signals when the camera 10 sends picked-up image signals in a repeated manner by the image-pickup side communicator 169. Further, the remote control terminal 20 sends back the time information which is attached to the displayed picked-up image signals to the camera 10 by the remote-control side communicator 241 when displaying of the picked-up image signals in the remote-control side display 243 by the remote-control side display controller 242 is completed.

In such way, in the communication system in this embodiment, the remote control terminal 20 sends information every time displaying of picked-up image signals is performed by the remote-control side display controller 242 and not only when the tracking command is performed in the remote-control side operating portion 22. Further, as for the content of communication, the camera 10 further sends time information and the remote control terminal 20 sends back the time information to the camera 10. When the camera 10 receives the time information from the remote-control side communicator 241, the system controller (communication delay time measuring portion) 14 calculates the communication delay time between the camera 10 and the remote control terminal 20 from the current time information in the camera 10 and the received time information. In this embodiment, when the tracking command is performed in the remote control terminal 20, by varying the pattern matching range in the camera 10 on the basis of the communication delay time information, the tracking object can be specified more easily.

In this embodiment, similarly to Embodiment 2, not only the tracking image which is generated by the remote-control side tracking image generator 211 when the tracking command is performed in the remote-control side operating portion 22 but also the coordinate information of where the tracking command was performed is sent by the remote-control side communicator 241.

In the operations of the camera 10 and the remote control terminal 20 which are configured as illustrated in FIG. 1 in this embodiment, the processes described in Embodiment 1 with reference to FIGS. 2A and 2B and FIG. 5 are similarly performed. Therefore, their descriptions are omitted.

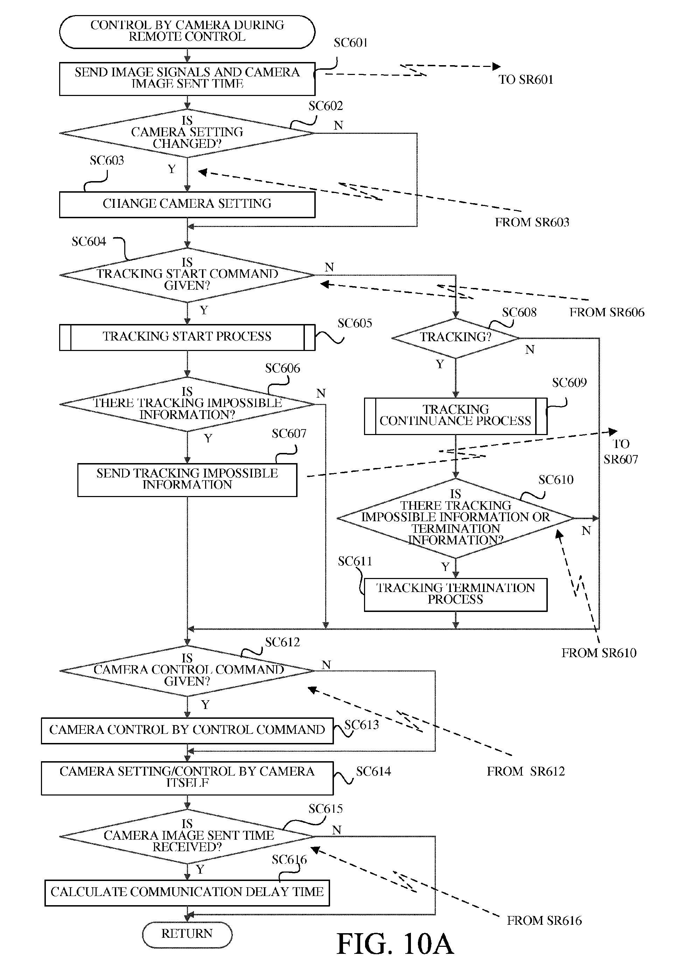

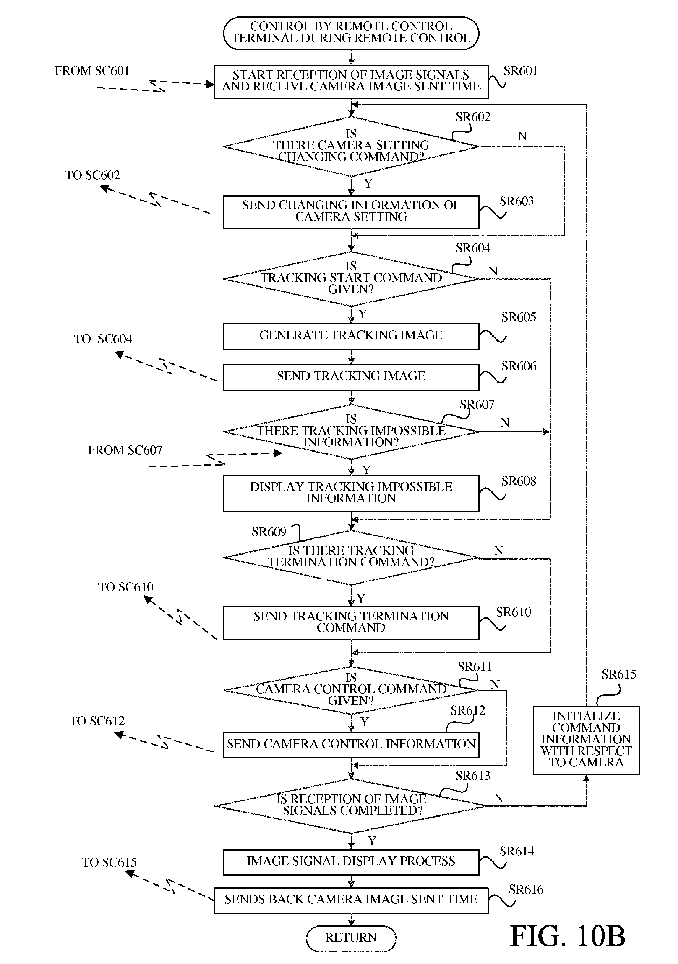

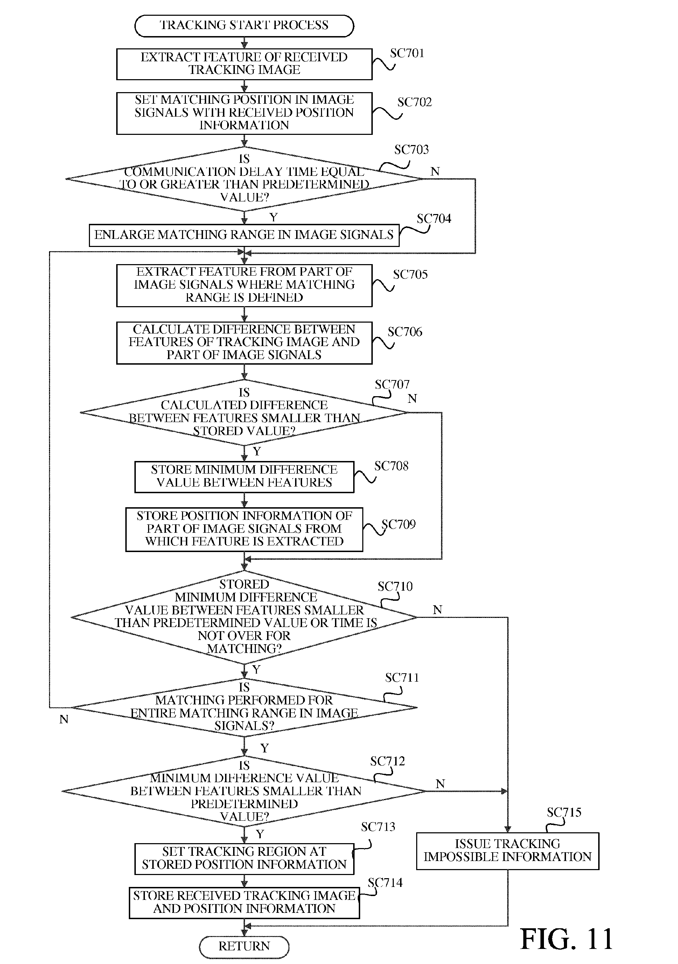

The operations of the camera 10 and the remote control terminal 20 having the above configurations in this embodiment will be described in detail with reference to FIGS. 10A, 10B and 11.

FIG. 10A is a flowchart of a control of the camera under the remote control of step SC007 in FIG. 2A in Embodiment 3, and FIG. 10B is a flowchart of a control of the remote control terminal during the remote control of step SR007 in FIG. 2B in Embodiment 3. The flowchart in FIG. 10A illustrates the control of the camera during the remote control, and the flowchart in FIG. 10B illustrates the control of the remote control terminal during the remote control.

First, processing performed in the camera will be described. In step SC601, image signals and the time when the camera 10 sent the image signals to the remote control terminal 20 (hereinafter, referred to as camera image sent time) are sent to the remote control terminal 20. In this embodiment, in addition to the image signals, the camera image sent time is also sent.

Descriptions of processes from steps SC602 to step SC603 and from step SC605 to step SC614 are omitted because they are similar to the processes of steps SC102 to step SC103 and from step SC105 to step SC114 in FIG. 3A. Further, a description of the process of step SC604 is omitted because it is similar to the process of step SC404 in FIG. 8A. In step SC615, to which the process proceeds after the camera control, etc. by the camera itself are performed in step SC614, whether the camera image sent time is received from the remote control terminal 20 is determined. If it is determined that the camera image sent time is received, the process proceeds to step SC616, and if it is determined that the camera image sent time is not received, the process ends. In step SC616, the communication delay time is calculated and the process ends.

Next, processing performed in the remote control terminal will be described. In step SR601, reception of image signals from the camera 10 is started and also the camera image sent time is received, and the processing proceeds to step SR602. Descriptions of processes from step SR602 to step SC605 and from step SR607 to step SR615 are omitted because they are similar to the processes of steps SR102 to step SR105 and from step SR107 to step SR115 in FIG. 3B. Further, a description of the process of step SR606 is omitted because it is similar to the process of step SR406 in FIG. 8B. Step SR616, to which the processing proceeds after reception of image signals started in step SC601 is completed in step SR613 and after the display process of the image signals are performed in step SR614, will be described. In step SR616, the camera image sent time which is received in step SR601 is sent back to the camera as-is and the processing ends.

In this embodiment, when the camera sends image signals in a repeated manner in step SC601, the camera image sent time which indicates the sent time is also sent by being attached to the image signals. In response, the remote control terminal 20 sends back the camera image sent time to the camera in step SR616 every time the reception of image signals is completed and the displaying of the image signals is performed in step SR614. In step SC616, the communication delay time is calculated from the difference between the time when the camera image sent time is received and the camera image sent time in the camera side. The communication delay time indicates the communication time back and forth between the camera and the remote control terminal until the camera 10 sends an image and the remote control terminal 20 displays the image signals and completes the communication with respect to the camera 10. According to the condition of the communication circuit, this communication delay time varies over time. In this embodiment, by further including the system of calculating the communication delay time, the tracking object can be specified easily in the tracking start process which is be described later in the description of FIG. 11.

Next, the tracking start process which is performed in step SC605 of FIG. 10A in Embodiment 3 will be described by using the flowchart of FIG. 11. Descriptions of processes of step SC701 and from step SC705 to step SC715 are omitted because they are similar to the processes of step SC201 and from step SC202 to step SC212 in FIG. 4. Further, a description of the process of step SC702 is omitted because it is similar to the process of step SC502 in FIG. 9. Step SC703, to which the processing proceeds after setting of a matching position is performed with the position information of where the tracking command was performed in step SC702, will be described. In step SC703, whether the communication delay time calculated in step SC616 of FIG. 10 is equal to or longer than a predetermined threshold is determined. If it is determined that the communication delay time is equal to or longer than the predetermined threshold, the processing proceeds to step SC704, and if not, the processing proceeds to step SC705. In step SC704, the currently set matching range is reset so as to be larger and the processing proceeds to step SC705.

The longer the communication delay time, the longer the time until the tracking object is to be specified in the camera after the object is specified in the remote control terminal 20. That is, as the communication delay time becomes longer, the possibility that the position where the object intended to be tracked exists in the picked-up image screen may be away from its position when the object was specified increases. If the position of the tracking object moved from its position at the time when the object was specified by a great distance to the extent that the object is not in the pattern matching range, the object cannot be specified and the tracking becomes impossible. In view of this, in a system where the communication delay time can be recognized as in the system of this embodiment, the pattern matching range is reset so as to be larger when it is determined that the communication delay time is to be long. In such way, even if the communication delay time is long and the position of the tracking object changed greatly, there is a great possibility that the tracking object can be specified. In this embodiment, the matching range is enlarged according to whether the communication delay time is longer than a threshold. However, it can be controlled so as to enlarge the matching range gradually as the communication time becomes longer. If the communication delay time is sufficiently short, it can be controlled so as to reduce the matching range.

As described above, this embodiment includes the above described communication system in addition to the communication system where the camera 10 sends image signals in a repeated manner and the remote control terminal 20 sends the image which is generated by the remote-control side tracking image generator 211 when the tracking command is performed through the remote-control side operating portion 22. That is, this embodiment includes the communication system where the sent time information is attached to the picked-up image signals which the camera 10 sends in a repeated manner and the remote control terminal 20 sends back the time information every time displaying is performed by the remote-control side display controller 242. By including the communication system for sending and receiving the time information, the communication delay time between the camera 10 and the remote control terminal 20 can be recognized. By varying the pattern matching range on the basis of the communication delay time, even if the communication delay time is long, the possibility of specifying the tracking object increases and the tracking control from the remote control terminal 20 can be performed easily.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. Parts of the above described embodiments may be arbitrarily combined.

### [Modification example of Embodiment 1]

Hereinafter, a modification example of Embodiment 1 of the present invention will be described with reference to the appended drawings.

First, a flow from when the remote control terminal 20 performs the object tracking command to when the image pickup apparatus performs tracking will be described. In FIG. 1, if the tracking command is performed through the remote-control side operating portion 22, the remote-control side tracking image generator 211 (generator) in the remote-control system controller 21 generates coordinate information (position information) of where the command was performed. In this modification example, the remote-control side operating portion 22 is a touch panel, and the coordinate information is generated with the coordinates where touched in an image which is being displayed in the remote-control side display 243. The remote-control side operating portion 22 may not be a touch panel and a system where the coordinates of the tracking object region can be set by the operation keys may be adopted. The generated coordinate information is sent to the image-pickup side communicator 169 by the remote-control side communicator 241 according to a command from the remote-control side system controller 21. The system controller 14 stores the coordinate information received from the image-pickup side communicator 169 in the SDRAM 166 and also starts the tracking start process assuming that the tracking command is performed in the remote control terminal 20.

As will be understood, the SDRAM 166 stores image signals ISᵢ, ISᵢ₊₁, ISᵢ₊₂ ... representing images captured in the past ("past image signals"), there being a set of such past image signals ISᵢ, IS₁₊₁, ISᵢ₊₂ ... collectively representing a corresponding past image Iᵢ, Iᵢ₊₁, Iᵢ₊₂ ..., e.g. a set of N per-pixel image signals. First, the system controller 14 (selector) selects the stored past image signals ISₛₑₗ going back for the time length corresponding to the communication delay time from the time when the coordinate information was received among the past image signals stored in the SDRAM 166. The past image signals ISₛₑₗ going back for the time length corresponding to the communication delay time which are selected here represent a past image Iₛₑₗ which is the same as the image displayed when an object was selected in the remote control terminal side. The system controller 14 imports the selected past image signals into the tracking image generator 141 and generates a tracking image with a predetermined region whose center corresponds to the received coordinate information.

Next, the tracking signal processor 125 imports the generated tracking image and generates a feature (characteristic information) including histograms of color information and a histogram of luminance information from the tracking image signals as described above. The object region detector 126 performs the search process on the stored past image signals ISₛₑₗ₊₁ which represent the past image Iₛₑₗ₊₁ that is next in the sequence of images after the image Iₛₑₗ represented by the selected past image signals ISₛₑₗ to search for the tracking object on the basis of the generated feature, and determines whether an object corresponding to the tracking object exists in a predetermined region in the next image Iₛₑₗ₊₁ of the sequence of past images. If the tracking object exists in the predetermined region, a tracking region is determined on the basis of the position coordinates where the tracking object exists.

However, when the tracking command is to be performed in the remote control terminal 20, in the camera side, this usually corresponds to a state where the past image Iₛₑₗ with respect to which the tracking object is specified is multiple images in the past because there is a significant communication time lag. Therefore, in the camera side, a first specification process of the tracking object needs to be performed on the image signals ISₛₑₗ₊₁ which represent the next image Iₛₑₗ₊₁ (a first intervening image between the selected past image Iₛₑₗ and the current image I_{curr}) after the image Iₛₑₗ represented by the selected past image signals ISₛₑₗ and this process needs to be repeated for further intervening images up to the image I_{curr-1} preceding the current image I_{curr}. In the system controller 14, once the tracking region has been specified with respect to the image signals ISₛₑₗ₊₁ representing the first intervening image, at least one further specification process for specifying the tracking object is performed on the image signals ISₛₑₗ₊₂, ISₛₑₗ₊₃, ... IS_{curr-1} representing further intervening images by the tracking signal processor 125 and the object region detector 126. By repeating the specification of the tracking object as described above, the tracking object is specified sequentially in the sequence of past image signals which has been stored taking account of the communication delay time, and finally, the specification of the tracking object is performed with respect to the current image signals IS_{curr}. However, if the communication delay time is extremely short, specification of the tracking object may be performed with respect to the current image signals on the basis of the selected past image signals without specifying the tracking object sequentially in the sequence of past images. When the tracking object is specified in the current image signals, the result thereof is sent to the system controller 14 to perform AF and AE control (perform focusing and adjust exposure).

Further, the position coordinates where the tracking object which is specified in the current image signals IS_{curr} exists is stored in the SDRAM 166, and by using this information when detecting a tracking object region next time and thereafter, the area for performing the search process to search for the tracking object can be limited. Every time the position coordinates where the object exists is updated when specifying the tracking object region, the position coordinates stored in the SDRAM 116 is also updated.

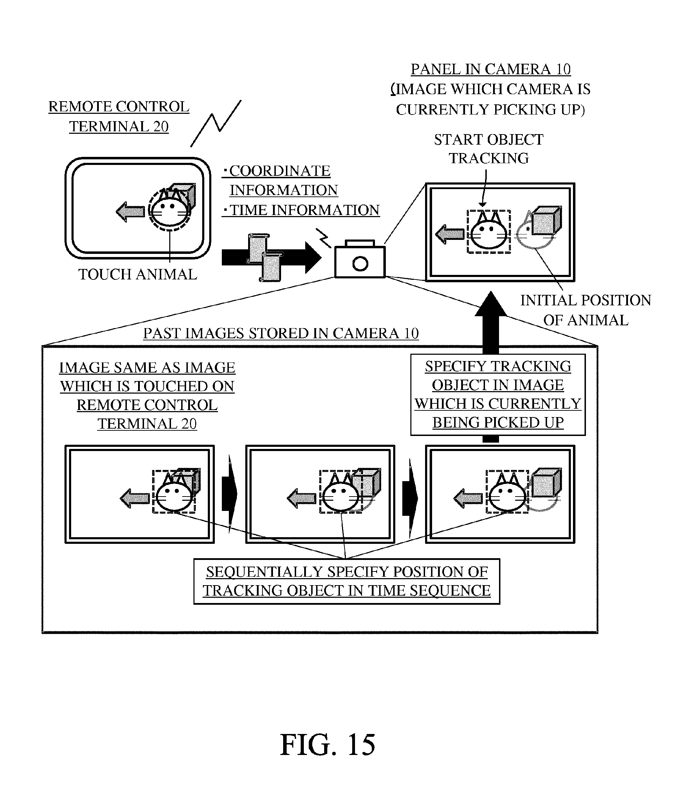

By the above described procedure, the tracking command is performed in the remote control terminal 20 and tracking is started in the camera (FIG. 15). When performing tracking, the image in which the tracking command was performed and the image from which the feature is extracted from the tracking position need to be the same. This is because there is a possibility that the object intended to be tracked is not at the position where the tracking command was performed unless the images are the same. In order to extract the feature from the image which is the same as the image in which the tracking command was performed in the remote control terminal 20, the camera 10 measures the communication delay time between the camera 10 and the remote control terminal 20 and stores the image signals in the time length corresponding to the communication delay time in advance.

At this time, the reason why the image signals in the time length corresponding the communication delay time are to be stored is because, when the tracking command is performed in the remote control terminal 20, an image which proceeded for the time length corresponding to the communication delay time is displayed in the camera 10 at the time when the camera 10 receives the coordinate information due to delay in communication. This communication delay time changes from time to time according to the communication condition. Therefore, the past images are stored accordingly. Here, past images in the time length slightly longer than the communication delay time may be stored.

When the tracking command is performed in the remote control terminal 20, the camera 10 selects the past image going back the time length corresponding to the communication delay time from the time when the coordinate information was received and extracts a feature (characteristic information) from the region whose center is at the received coordinate information of this image. Based on the feature, pattern matching is performed sequentially in a time sequence with the past image signals and finally, the tracking object is specified in the image signals which are currently being picked up. Even if the tracking object is found in a certain past image, there is a possibility that the object is away from the position by a great distance in the image signals which are currently being picked up.

For example, in a case where the object intended to be tracked is away by a great distance when the pattern matching is performed with the current image signals at the state where the feature is extracted, there is a possibility that the object cannot be found if the pattern matching region is small. Further, there is a possibility that the tracking object is falsely recognized if the pattern matching region is large. By specifying the object sequentially in a time sequence, the tracking object can be specified more accurately. In such system, even when the tracking command is performed in the remote control terminal 20, the problem of communication time lag can be mended and the object intended to be tracked can be specified accurately.

In this modification example, the refresh cycle of the past images stored in the camera 10 is each of the images which are picked up. However, in order to reduce the storage amount in the SDRAM 116, images may be thinned out to be stored. The refresh cycle needs to be set so that at least the tracking object can be determined when specifying the object in a time sequence. This can be determined on the basis of the pattern matching range where the object specification is to be performed and the maximum moving distance the object which is to be tracked. Further, in this modification example, the image which was touched in the remote control terminal 20 is specified in the stored past image signals on the basis of the communication delay time. However, it may be processed so as to select an image having the same frame information as the image touched in the remote control terminal 20. In a case where the refresh cycle is large, there may not be a past image where the communication delay time or the frame information match. In such case, the closest image is to be selected.

Next, an object tracking function will be described in detail. Here, a case where the tracking command is performed in the camera 10 will be described as an example. When the tracking command to track the object is given through the operating portion 134, the tracking image generator 141 generates a tracking image with a predetermined range whose center is at the position information when the tracking command was made, for example, at the touched coordinates in a touch panel. The predetermined range needs to be at least in the size that enables to generate a feature (characteristic information) not frequently causing mis-tracking in the tracking control. The predetermined range may be a fixed range or may adopt a system where the predetermined range can vary according to user setting, etc. With respect to the generated tracking image, histograms of color information and a histogram of luminance information are generated by the tracking signal processor 125 and these histograms are the feature of the tracking image. In this modification example, histograms of color and luminance are generated, however, only either one may be generated.

In the object region detector 126, an image having the size similar to the size of the tracking image is generated from the image signals which are currently being picked up to be a tracking candidate image. Similarly to the tracking image, histograms of color and luminance are generated by the tracking signal processor 125 with respect to the tracking candidate image and these histograms are the feature of the tracking candidate image. The object region detector 126 calculates the difference in each color information and the difference in luminance information between the features of the tracking image and the feature of the tracking candidate image, calculates the sum of the calculated values and stores the result. At the same time, the position information of the tracking candidate image is also stored.

Further, the matching is performed by sequentially generating tracking candidate images from the image signals which are currently being picked up, and the differences between the elements in the feature of each of the tracking candidate images and the elements in the feature of the tracking image are calculated and the sum of the differences are calculated. The smallest value among the sums of the differences between elements in the features and the position information of the tracking candidate image corresponding to the smallest value are stored by rewriting the previously stored information with them. If the sum of differences between the elements in the feature which is obtained at last is smaller than a predetermined value, the tracking candidate image corresponding to the sum is specified as the tracking object, and a predetermined region is set as the tracking region according to the stored position information. Here, a predetermined value relating to the sum of differences between the features is determined when the tracking operation is executed on the basis of a rate allowing to track the intended object and a rate allowing not to mis-track an object which is not intended. Accordingly, the tracking region is determined and the tracking is started. Here, when the tracking command is performed in the remote control terminal 20, the pattern matching usually needs to be performed sequentially through the past images from Iₛₑₗ to I_{curr}.

Next, a tracking continuance method will be described. As for information for continuing the tracking, the tracking candidate image and the position information where the tracking region is set are stored in the SDRAM 166. When continuing the tracking, the matching between picked up signals and the tracking image is performed as described above by the object region detector 126 and the tracking signal processor 125 on the basis of the tracking image stored in the SDRAM 166 every time the image-pickup is performed.

At this time, on the basis of the stored position information where the tracking region is set, a range of picked up signals where the matching is to be performed is limited. By performing the matching in a predetermined range with the position where the tracking region is set being the center, mis-tracking due to performing the matching of an unnecessary range can be prevented and the arithmetic time can be shortened. The predetermined range to perform matching is set, by designing the maximum distance the object intended to track can move within a picked-up image screen during the time period since the tracking continuance process is performed until the next tracking continuance process is to be performed, to a range which can cover the movement of the object if the object moves the maximum distance. If this range is large, an object can be tracked even if the object moves a great distance but mis-tracking can occur frequently. If this range is small, an object cannot be tracked if the object moves a great distance but mis-tracking does not occur frequently. When the matching is performed again to continue the tracking, as described above, if the sum of the differences between the elements in the features obtained at last is smaller than a predetermined value, it is determined that the tracking candidate image corresponding to the lastly obtained sum is the tracking object, and the tracking region is updated with the predetermined region from the position information of the tracking candidate image.

Further, the position information stored in the SDRAM 166 is rewritten with the position information of the tracking candidate image at this time to be updated. At the time of the next tracking continuance process, an appropriate matching region can be set by using the updated position information. In such way, continuance of tracking is performed. The tracking continuance process does not need to be performed for every image-pickup. For example, it may be controlled so as to perform the tracking continuance process every predetermined times of image-pickup. As the interval of image-pickups between the tracking continuance processes becomes long, an object cannot be tracked if the object moves a great distance. However, the processing time can be reduced.

Here, termination of the tracking will be described. If a tracking terminate command is given from the operating portion 134 or the remote-control side operating portion 22 when the tracking is ongoing, the system controller 14 terminates the tracking and returns to the non-tracking operation. For example, the AF region which was set for the tracking region returns to the AF region of normal setting when the tracking is terminated. Similarly, if a predetermined time period elapsed while not being able to specify the object intended to be tracked when the tracking is ongoing, the tracking is terminated. If a predetermined standby time period during when the tracking object cannot be specified is long, the possibility of specifying the tracking object again and resuming with the tracking is high but the process to return to the normal state is to be delayed. If a predetermined standby time period during when the tracking object cannot be specified is short, the reverse of the above case will happen.

As described above, processes to start, continue and terminate the tracking of an object are performed.

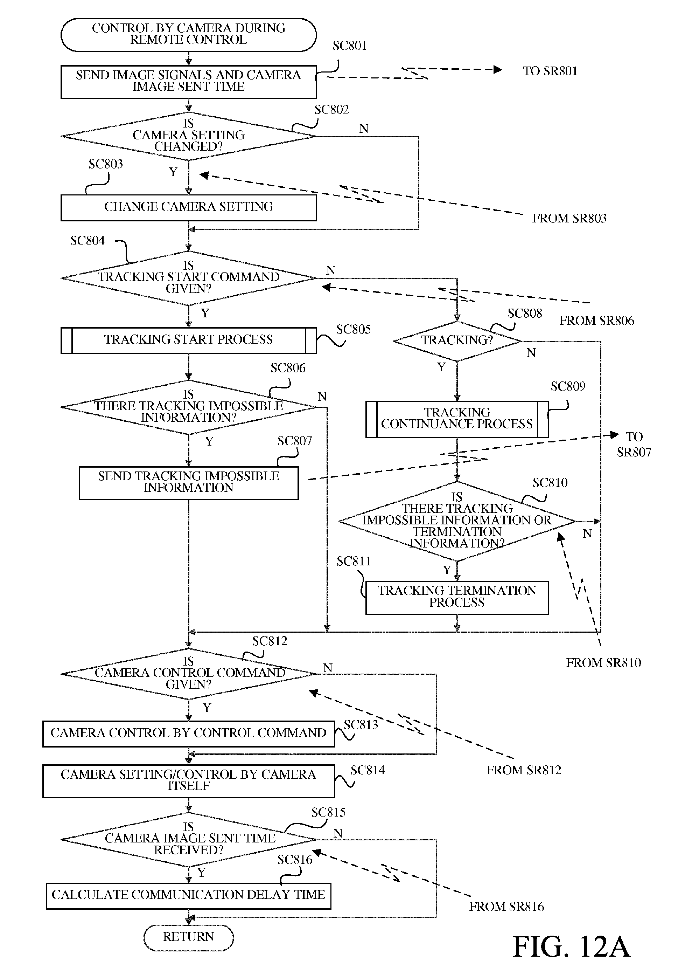

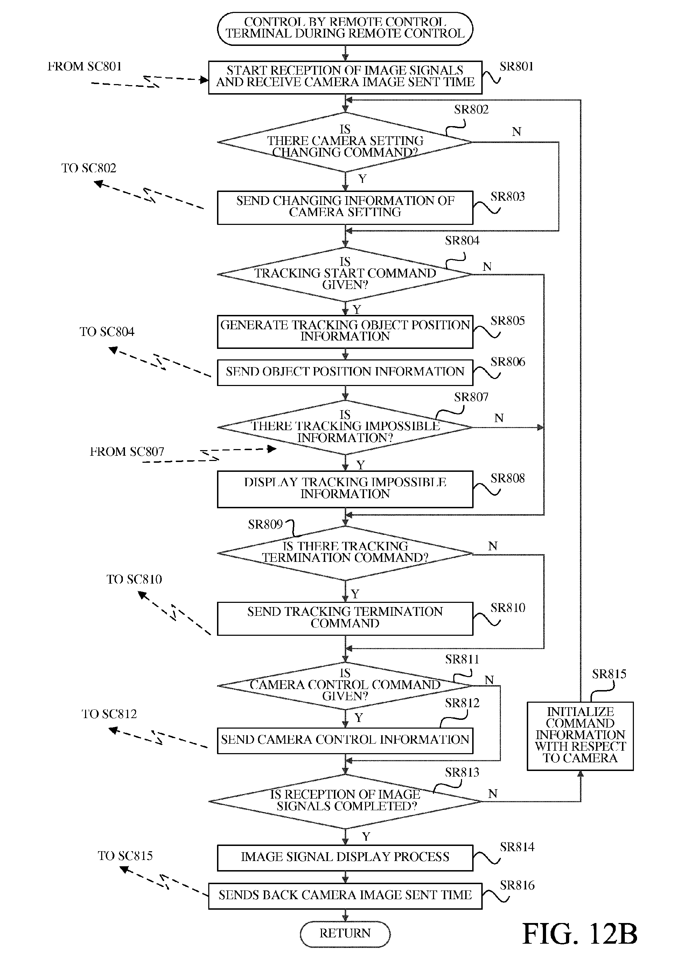

Next, operations of the camera 10 and the remote control terminal 20 having the configurations illustrated in FIG. 1 according to this modification example will be described with reference to FIGS. 12A and 12B to FIG. 15.

Descriptions of the general remote control processes performed in the system controller 14 in the camera 10 and the remote-control side system controller 21 in the remote control terminal 20 in this modification example will be omitted because they are similar to the above flowcharts in FIGS. 2A and 2B.

Next, camera control during remote-controlling of step SC007 in FIG. 2A and remote control terminal control during remote-controlling of step SR007 in FIG. 2B will be described by using the flowcharts in FIGS. 12A and 12B.

The flowchart in FIG. 12A illustrates the control of the camera during the remote control, and the flowchart in FIG. 12B illustrates the control of the remote control terminal during the remote control.

First, processing performed in the camera will be described. In step SC801, image signals and the time when the camera 10 sent the image signals to the remote control terminal 20 (hereinafter, referred to as camera image sent time) are sent to the remote control terminal 20 and the processing proceeds to step SC802. The camera sends image signals without confirming their reception at the remote control terminal 20. In step SC802, whether the camera setting was changed through the remote control terminal 20 is determined. If it is determined that the camera setting is changed, the processing proceeds to step SC803, and if it is determined that the camera setting is not changed, the processing proceeds to step SC804. In step SC803, the camera setting changed through the remote control terminal 20 is reflected in the camera 10 and the processing proceeds to step SC804.

For example, if a recording image quality is changed in the remote control terminal, the changed setting of the recording image quality is reflected in the camera in step SC803. In step SC804, whether a tracking start command is given by the remote control terminal 20 is determined. If it is determined that the tracking start command is given, the processing proceeds to step SC805, and if it is not, the processing proceeds to step SC808. In this modification example, when the tracking object position information (tracking object coordinate information) is received from the remote control terminal 20, it is assumed that the tracking start command is given.

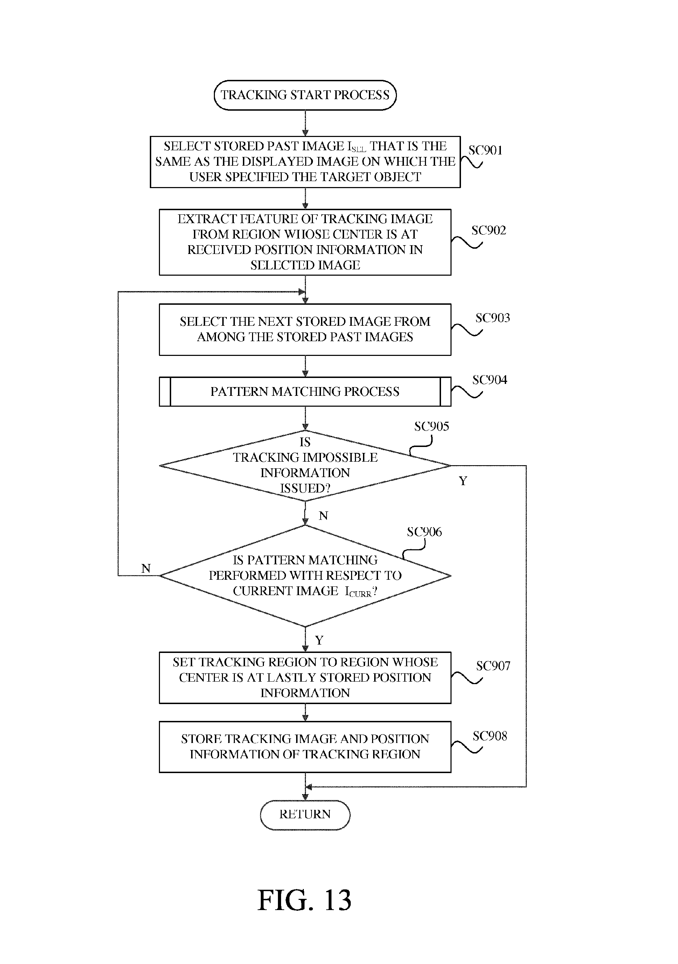

In step SC805, the tracking start process is performed on the basis of the received tracking object position information and the processing proceeds to step SC806. The details of the process of step SC805 will be described below in the description of FIG. 13. In step SC806, whether tracking was successful in step SC805 is determined. If it is determined that the tracking was not successful in step SC805, the processing proceeds to step SC807, and if it is determined that the tracking was successful, the processing proceeds to step SC812 and switches to another process other than the tracking process.

In step SC807, with the assumption that the tracking was not successful, tracking impossible information is sent to the remote control terminal 20. Whether the tracking was successful is determined based on the tracking impossible information which indicates successful/unsuccessful of tracking with 1 bit and which is issued in step SC805. Next, in step SC808, which is the step the processing proceeds if it is determined the tracking start command is not given in step SC804, whether tracking is currently being performed is determined. If it is determined that the tracking is being performed, the processing proceeds to step SC809. If not, the processing proceeds to step SC812 and switches to another process other than the tracking process. In step SC809, which is the step to which the processing proceeds when tracking is currently being performed, the tracking continuance process is performed and the process proceeds to step SC810. The details of the tracking continuance process will be omitted because they are similar to the flowchart in FIG. 5. In step SC810, whether the tracking impossible information was present in step SC809 or whether tracking stop is commanded from the remote control terminal 20 is determined. If either of the above applies, the processing proceeds to step SC811. If not, the processing proceeds to step SC812 and switches to another process other than the tracking process.

In step SC811, a tracking termination process is performed, and then, the processing proceeds to step SC812 and switches to another process other and the tracking process. If the tracking cannot be continued, i.e. the tracking object cannot be specified or if a user stops the tracking, the tracking is terminated and the camera returns to the normal image pickup state. In this modification example, the normal image pickup state is a state where a frame for adjusting AF and AE is set at the center of the screen and not at the tracking region. The normal image-pickup state is not limited to the configuration of this modification example and may adopt other configurations as long as it is a state where tracking is not performed.

Next, in step SC812, which is the step to which the processing proceeds after the processes relating to the tracking are performed, whether the camera control through the remote control terminal 20 is commanded. If it is determined that the camera control by the remote control terminal 20 is commanded, the processing proceeds to step SC813, and if not, the processing proceeds to step SC814. In step SC813, the camera is controlled according to camera control commands from the remote control terminal 20 and the processing proceeds to step SC814. As an example of a process performed in step SC812 and step SC813, zooming is performed according to the zooming command if the remote control terminal 20 commands to perform zooming. In step SC814, the camera setting and control are performed by the camera itself and the processing proceeds to step SC815. In step SC814, a change in the camera setting and camera control commands made by operating the camera itself are accepted, and the camera 10 is controlled according to them.

The camera control which is performed without following a user's command such as AF is also performed at this time. Here, details are omitted. In step SC815, whether the camera image sent time is received from the remote control terminal 20 is determined. If it is determined that the camera image sent time is received, the process proceeds to step SC816, and if it is determined that the camera image sent time is not received, the process ends. In step SC816, the communication delay time is calculated and the process ends.

Next, processing performed in the remote control terminal will be described. In step SR801, reception of image signals from the camera 10 is started and also the camera image sent time is received, and the processing proceeds to step SR802. Although displaying of the received image signals is performed in the after-mentioned step SR814, processes from step SR802 to step SR813, which are described hereinafter, are described under assumption that image signals are already displayed in step SR814 in the control of the remote control terminal during a previous remote control. In step SR802, whether changing of the camera setting is commanded by a user in the remote control terminal 20 is determined. If it is determined that the setting change is commanded, the processing proceeds to step SR803, and if not, the processing proceeds to step SR804.

In step SR803, the change information of the camera setting is sent to the camera 10. Next, in step SR804, whether tracking start is commanded in the remote control terminal 20 is determined. If it is determined that the tracking start is commanded, the processing proceeds to step SR805, and if not, the processing proceeds to step SR809. In this modification example, image signals are displayed in the remote control terminal 20 and at the same time, the tracking start is commanded if an object is touched on the touch panel on which a touching operation can be performed.

In step SR805, tracking object position information is generated with the coordinates where a user touched and the processing proceeds to step SR806. In step SR806, the tracking object position information is sent to the camera 10 and the processing proceeds to step SR807.

Next, in step SR807, whether tracking impossible information, which is sent from the camera 10 when the tracking was unsuccessful due to failing in the pattern matching as a result of the tracking start process performed in step SC805 in the camera side, is received is determined. If it is determined that the tracking impossible information is received, the processing proceeds to step SR808, and if not, the processing proceeds to step SR809.

In step SR808, in order to notify a user that the tracking was not successful in the camera side, an indication that the tracking was not successful is displayed and the processing proceeds to step SR809. By displaying an indication that the tracking was not successful, a user can be urged to perform the tracking command again. In step SR809, whether termination of the tracking is commanded by the remote control terminal 20 is determined. If it is determined that termination of the tracking is commanded, the processing proceeds to step SR810, and if not, the processing proceeds to step SR811. The tracking termination command is an operation performed when a user wishes to terminate the tracking when the tracking is currently being performed. By the user touching a tracking stop icon displayed in the remote control terminal 20, the tracking termination command is performed.

In step SR810, the tracking termination command is sent to the camera 10 and the processing proceeds to step SR811. In step SR811, whether the camera control through the remote control terminal 20 is commanded is determined. If it is determined that the camera control through the remote control terminal 20 is commanded, the processing proceeds to step SR812, and if not, the processing proceeds to step SR813. In step SR812, information on the camera control performed in the remote control terminal 20 is sent to the camera and the processing proceeds to step SR813. For example, if zooming is performed by the remote control terminal 20, control information so as to perform zooming is sent to the camera 10. In step SR813, whether reception of the image signals which are started to be received in step SR801 is completed is determined. If it is determined that the reception is completed, the processing proceeds to step SR814, and if it is determined that the reception is not completed, the processing proceeds to step SR815.

In step SR814, the display processing of the image signals whose reception is completed is performed and the processing proceeds to step SC816. In step SR816, the camera image sent time which is received in step SR801 is sent back to the camera as-is and the processing ends. In step SR815, various command information with respect to the camera 10 performed from step SR802 to step SR812 are initialized (in a state where there is no command) and the processing returns to step SR802 to perform the processing again from step SR802. Although image signals are sent to the remote control terminal 20 every time image-pickup is performed in the camera side, the remote control terminal 20 may not necessarily display all of the image signals and whether the image signals are displayed depends on the processing ability of the remote control terminal 20 and the circuit condition. As the processing ability of the remote control terminal 20 becomes lower, image signals are displayed at even more delayed cycle with respect to the display cycle in the camera. Even while the image signals which are started to be received in step SR801 continue to be received, changing of the camera setting, performing of the camera control and the tracking start command with respect to the image which is currently being displayed can be performed in the remote control terminal 20.

That is, until reception is completed in step SR813, processes from step SR802 to step SR812 can be performed via the process of step SR815. When reception of the image signals is completed, the image signals are displayed in the remote control terminal 20 in step SR814 and reception of image signals is started again in step SR801 after the control of the remote control terminal during the next remote control is performed. While image signals are being received again, commands of various processes with respect to the image signals which are currently being displayed are accepted. At the starting stage of receiving of the image signals in step SR801, such as just after the remote control is started and none of the image signals is displayed yet, the processes of steps SR802, SR804, SR807, SR809 and SR811 are all determined as N. In such way, various steps are skipped without accepting various control commands. After the image signals are displayed for the first time in step SR814, various control commands from step SR802 to step SR812 are accepted.

In this modification example, when the camera sends the image signals in a repeated manner in step SC801, the camera image sent time which indicates the sent time is also sent by being attached to the image signals. In response, the remote control terminal 20 sends back the camera image sent time to the camera in step SR816 every time the reception of image signals is completed and the displaying of the image signals is performed in step SR814. In step SC816, the communication delay time is calculated from the difference between the time when the camera image sent time is received and the camera image sent time in the camera side. The communication delay time indicates the communication time back and forth between the camera and the remote control terminal until the camera 10 sends an image and the remote control terminal 20 displays the image signals and completes the communication with respect to the camera 10. According to the condition of the communication circuit, this communication delay time varies over time.

As described in the description of FIG. 15, in order to perform the tracking command of an object, the object needs to be specified in the same image as the image in which a user performed the object tracking command and at the same coordinates as the coordinates where the tracking command was performed. When the tracking command is performed in the remote control terminal 20, an image that comes after the image displayed in the remote control terminal 20 is already displayed in the camera. Therefore, past images are stored in the camera in order to perform the tracking command with respect to the image same as the image in which the tracking command is performed in the remote control terminal 20. In order to store the image in which the tracking command was performed in the remote control terminal 20, images in the time length corresponding to at least the above described communication delay time (communication time back and forth between the camera and the remote control terminal) need to be stored. In the camera 10, the past images are always stored in such manner. When the tracking start command is performed in step SR804, the tracking start process is performed in step SC805 on the basis of the object position information communicated in the above step SR806 and the communication delay time calculated in step SC816 when the tracking start command was given.

Next, the tracking start process of step SC805 in FIG. 12A will be described by using the flowchart of FIG. 13.

In step SC901, among the stored past images, the image Iₛₑₗ that is the same as the displayed image with respect to which the user specified the target object at the remote control terminal is selected as the image from which a feature (characteristic information) is to be extracted and the processing proceeds to step SC902. The feature to be extracted includes histograms of color information and a histogram of luminance information as described above. In this modification example, a past image is selected based on the time information of the displayed image with respect to which the user specified the target object at the remote control terminal. However, alternatively, a system where frame information of the past images is stored along with the past images and a stored past image may be selected whose frame information matches the displayed image with respect to which the user specified the target object at the remote control terminal. In step SC902, with respect to the image selected in step SC901, a feature is extracted from a predetermined region whose center is at the object position information received from the remote control terminal 20 and the processing proceeds to step SC903. Incidentally, it is not necessary for the selected stored past image to be exactly the same as the displayed image as long as the two images correspond sufficiently with one another for pattern matching to be possible based on the region extracted from the selected stored past image succeed using the object position information received from the remote control terminal 20. For example, the selected stored past image and the displayed image could have the same time information or frame information but differ in resolution or quality.

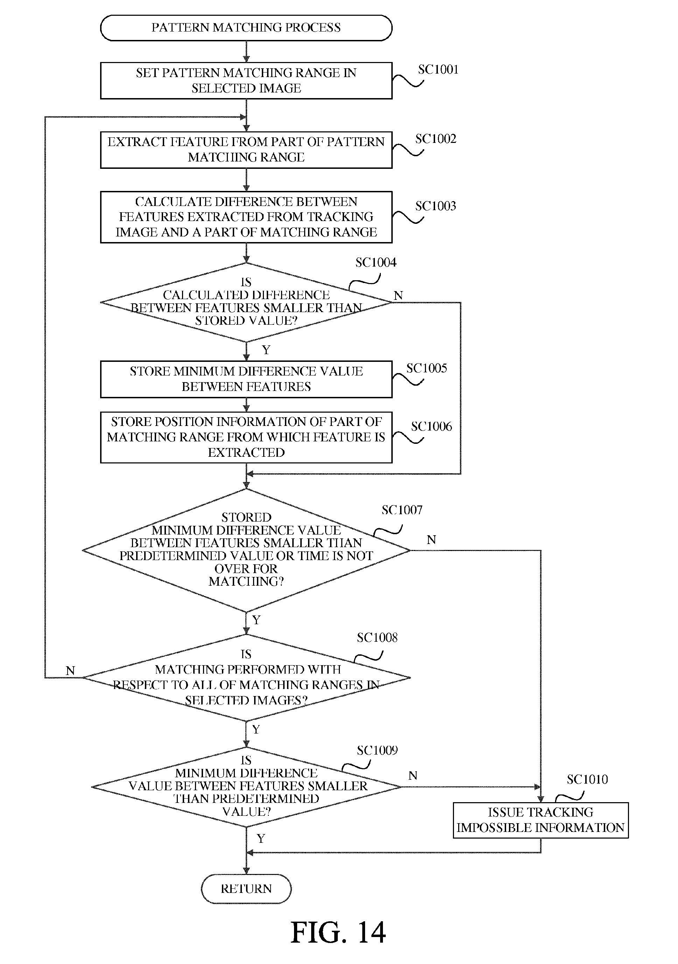

In step SC903, among the stored past images, the image Iₛₑₗ₊₁ that is the next image after the selected image Iₛₑₗ is used and the processing proceeds to step SC904. In step SC904, pattern matching is performed on the basis of the feature extracted in step SC902 and the image Iₛₑₗ₊₁ used in step SC903, and the processing proceeds to step SC905. Details of step SC904 will be described later in the description of FIG. 14.

In step SC905, whether the tracking impossible information is issued in step SC904 is determined. If it is determined that tracking impossible information is not issued, the processing proceeds to step SC906, and if it is determined that the tracking impossible information is issued, it is determined that the tracking cannot be performed and the processing ends. In step SC906, whether the pattern matching is performed with respect to the current image I_{curr} which is being picked up in the current time is determined. If it is determined that the pattern matching is performed with respect to the current image I_{curr}, the processing proceeds to step SC907, and if it is determined that the pattern matching is not yet performed with respect to the current image I_{curr}, the processing returns to step SC903. As described above in the description of FIG. 15, by repeating the processes from step SC903 to step SC906, the regions where the tracking object exists (the second tracking regions) are sequentially specified in the stored past images. Then, finally, the pattern matching is performed with respect to the current image I_{curr} which is being picked up at the current time and the region (the first tracking region) in which the tracking object exists is specified. Thereby, even if the moving distance of the tracking object is large, the tracking object can be specified in the image which is currently being picked up.

Next, in step SC907, to which the process proceeds when the pattern matching was performed with respect to the current image I_{curr} which is currently being picked up in step SC906, the tracking region is set to the region whose center is at the position information which is lastly stored and the processing proceeds to step SC908. The lastly stored position information corresponds to the position where the object which is intended to be tracked was found in the image which is currently being picked up. With respect to this tracking region, the camera 10 performs AF and AE processing in step SC814 of FIG. 12A. In step SC908, as information for continuing with the tracking, the tracking image from which the feature is extracted in step SC902 and the position information with which the tracking regions is set in step SC907 are stored and the processing ends. Based on these information, the tracking continuance process is performed in step SC809 of FIG. 12A.

As described above, due to the communication delay time, the image in which the tracking command is performed by the remote control terminal 20 is specified in the past images and the feature of the tracking object is extracted on the basis of the position information of the tracking object which is received from the remote control terminal 20. Further, by performing the pattern matching with respect to the images in a time sequence from the specified past image on the basis of the feature, the tracking object is specified in the image which is currently being picked up. By the past images in the time length corresponding to the communication delay time being stored in the camera, specifying the image which is the same as the image in which the tracking command was performed in the remote control terminal 20 and extracting the features on the basis of the position information, falsely tracking an object due to communication time lag can be prevented and the tracking object can be specified more accurately. By the camera 10 performing the control such as AF and AE with respect to the tracking region, preferable focus and exposure can be easily set with respect to the object which a user wishes to track.

Next, the pattern matching process of step SC904 in FIG. 13 will be described by using a flowchart of FIG. 14. In step SC1001, a pattern matching range is set with respect to the image selected in step SC903 and the processing proceeds to step SC1002. The range which was set in the previous pattern matching process whose center is at the position information lastly stored in the after-mentioned step SC1006 is set. The position information is the position where the object which is intended to be tracked is expected to exist. If this is the first pattern matching process, the position information received from the remote control terminal 20 which was used when calculating the feature in step SC902 in FIG. 13A is referred to. In step SC1002, a feature is extracted from a partial region of the pattern matching region and the processing proceeds to step SC1003.

The size of the region from which the feature is to be extracted in step SC1002 is similar to the size of the region from which the feature is extracted in step SC902 of FIG. 13A. Further, matching with the image signals is performed by sequentially changing the position to extracted image signals in the predetermined range among the image signals every time the process returns to step SC1002 by the after-mentioned step SC1008. Here, the larger the range for performing the matching, the higher the possibility of finding the tracking object, but the possibility of mis-tracking also becomes high. As for the changing method of the extraction position, the extraction position is changed with respect to each row, and when the extraction of one row is finished, then the extraction is performed with respect to the next row in line. Of course, lines may be prioritized when performing the extraction. As for the extraction range, extracted images may be overlapped or may not be overlapped, this may be determined according to the tracking accuracy. If the extracted images are to be overlapped, for example, in a case where a extraction image is generated every time shifted by 1 pixel, a tracking accuracy improves because the matching is performed precisely.

On the other hand, if another tracking image is set at the range adjacent to the tracking image so that the tracking images do not overlap, for example, the calculation amount of the matching is reduced but the tracking accuracy is also reduced. Next, in step SC1003, the difference between the features extracted in step SC902 of FIG. 13A and the feature extracted in step SC1002 is calculated and the processing proceeds to step SC1004. In step SC1004, whether the difference between the features calculated in step SC1003 is smaller than the difference value which is currently stored is determined. If it is determined that the calculate difference value is smaller than the currently stored difference value, the processing proceeds to step SC1005, and if not, the processing proceeds to step SC1007. In such way, the difference between the features of the object which is intended to be tracked and the feature of the pattern matching target image is obtained, and here, the smaller the difference, the better the matching.

Therefore, whether the difference between the features is the minimum as of now is determined in step SC1004, and the minimum value is stored by the after-mentioned process. If a difference between the features is not yet stored in step SC1005, the processing inevitably proceeds to step SC1005. In step SC1005, the minimum value of the differences between the features which are calculated is stored and the processing proceeds to step SC1006.

In step SC1006, the center position coordinates of the region from which the feature is extracted in step SC1002 is stored and the processing proceeds to step SC1007. This center position information is the position information where the best matching is obtained with respect to the image signals with which the pattern matching is currently being executed, and at the end, the position information where the tracking object is expected to exist is stored. This position information is used for setting the pattern matching range in step SC1001 in the next pattern matching processing. Alternatively, if the selected image with which the pattern matching was performed is the image which the camera is currently picking up, the position information is used for setting the tracking region. Although the center position coordinate is used in this modification example, it is needless to say that, for example, coordinates in the upper left of a region may be used and not the center position.

Next, in step SC1007, whether the minimum value of the differences between the features stored in step SC1005 is larger than a predetermined value and whether it is time over for performing the pattern matching are determined. If it is determined that the stored minimum difference value between the features is smaller than the predetermined value or if it is determined that time is not yet over, the processing proceeds to step SC1008. If it is determined that the stored minimum difference value between the features is larger than the predetermined value and that time is over, the processing proceeds to step SC1010. In a case where a pattern having small difference between the features does not occur even spending a long time for pattern matching, the possibility is high that the object which is intended to be tracked is not in the range for performing the matching. Therefore, a time limit is set for the pattern matching, and a process where the matching is terminated if the minimum difference value between the features is larger than a predetermined value and if the time limit is passed is performed. Such a time limit can vary according to the minimum difference value between the features which is stored, and it can be set that the larger the minimum value, the faster the time limit be over.

Next, in step SC1008, whether the extraction of the feature performed in step SC1002 is performed with respect to all of the matching regions is determined. If it is determined that the extraction a feature is performed with respect to all of matching regions, the processing proceeds to step SC1009. If it is determined that the extraction of the feature is not performed with respect to all of the matching regions, the processing returns to step SC1002 and continues with the pattern matting process with respect to the image signals which are currently selected in step SC1002 to step SC1007. In step SC1009, the pattern matching ends and whether the minimum difference value between the features which is lastly stored is smaller than a predetermined value is determined. If it is determined that the minimum difference value is smaller than the predetermined value, the processing ends, and if not, the processing proceeds to step SC1010. If the minimum difference value between the features is smaller than the predetermined value, with the assumption that the tracking object is found, the tracking start process of FIG. 13 is continued.

In step SC1010 to which the processing proceeds when the minimum difference value between the features is larger than the predetermined value and time is over for performing the matching, it is assumed that the tracking object was not specified and the tracking impossible information is issued, and thereafter, the processing ends. When the tracking impossible information is issued, cancelling the tracking start process in step SC905 of FIG. 13 and an indication that the tracking object was not specified is sent to the remote control terminal 20 in step SC807 of FIG. 12A.

As described above, the pattern matching is performed with respect to a selected past image and the position information where the tracking object is expected to exist is obtained. By performing the pattern matching with respect to the past images sequentially in a sequence of images, the position information where the tracking object exists in the image which is currently being picked up is obtained.

The description of the tracking continuance process of step SC809 in FIG. 12A which is performed hereafter is omitted because it is similar to the flowchart of FIG. 5 which is described above.

As described above, the camera 10 sends not only the picked-up image signals but also the sent time information of the image signals to the remote control terminal 20 and the remote control terminal 20 sends back the sent time information, as-is, to the camera every time the image signals are displayed. The camera 10 measures the communication delay time from the difference between the time information at the time when the sent time information is received from the remote control terminal 20 and the received sent time information at all times, and the camera 10 stores picked-up image signals for the time length corresponding at least to the communication delay time in the SDRAM 116. When the tracking control is performed with the tracking command from the remote control terminal 20, the system controller 14 receives the coordinate information which is generated by the remote-control side system controller 21 and with which the tracking command was performed. By taking account of the communication delay time (delay from sending image signals representing an image to receiving the coordinate information specified by a user when that image is displayed at the remote control terminal), and storing past images for a storage period at least equal to the delay time, the system controller 14 is able to select the image which was displayed in the remote-control side display 243 at the time when the tracking command was performed in the remote control terminal 20 among the past images stored in the SDRAM 166.

Further, the tracking image generator 141 generates an image of the tracking object (tracking image) with a predetermined region whose center is at the received coordinate information in the selected image. The system controller 14 performs the tracking control by specifying the tracking object in the image signals which are currently being picked up by the tracking signal processor 125 and the object region detector 126 on the basis of the image of the tracking object. In order to specify the tracking object in the image signals which are currently being picked up, the pattern matching is performed between the stored past images and the image of the tracking object sequentially in a time sequence starting from the past image signals with which the image of the tracking object was generated.

In this modification embodiment, the tracking command is performed through the remote control terminal 20 not only with the position information of the tracking object but also by specifying the tracking object by taking the communication delay time in to consideration. Thereby, problems such as falsely tracking an object other than the object which a user intends to track due to the influence of communication delay and a user needing to perform the tracking command with respect to the position assessed by taking a communication time lag into consideration are mended. As a result, regardless of the communication delay, the object which a user intends to track can be tracked more accurately and the tracking command can be performed without a user worrying about the communication delay.

Therefore, according to the present invention, the object which is remotely specified by a user can be tracked more accurately regardless of the communication time lag.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

### [OTHER EMBODIMENTS]

The object of the present invention can also be achieved as described below. That is, a non-transitory computer-readable storage medium (a storage medium) in which program code of software describing the procedure for realizing the functions of the above described embodiments is to be supplied to an image pickup apparatus or a remote control terminal. Then, a computer (or a CPU, an MPU, etc.) of the image pickup apparatus or the remote control terminal reads the program code stored in the storage medium and executes the program codes.

In such a case, the program code itself which is read from the storage medium realizes the new functions of the present invention, and the storage medium in which the program code is stored and the program constitute the present invention.

As for the storage medium for supplying the program code, for example, a flexible disk, a hard disk, an optical disk, a magnet-optical disk, etc. are suggested. Further, CD-ROM, CD-R, CD-RW, DVD-ROM, DVD-RAM, DVD-RW, DVD-R, an electromagnetic tape, a nonvolatile memory card, ROM, etc. may also be used. A program embodying the present invention may be carried on or by a carrier medium other than a storage or recording medium. For example, the carrier medium may be a transmission medium such a signal. In this case, the program may be supplied by transmission in the form of a signal through a network (downloading or uploading). The network may be the Internet. A program embodying the present invention may, in particular, be an app downloaded from an app store such as ITunes (a registered trade mark of Apple Corp.) or Google Play.

Moreover, by allowing the program code which the computer reads be executed, the functions of the above described embodiments are realized. Also, the present invention includes a case where a part of or all of the actual processing is performed by the OS (operating system) which is running on the computer, for example, on the basis of the commands given by the program code and the functions of the above described embodiments are realized through such processing.

Further, the present invention includes the following case. The program code is read from the storage medium first, and the program code is written on a memory provided in an expansion board inserted in the computer or in an expansion unit which is connected with the computer. Thereafter, on the basis of commands of the program code, a part of or all of the actual processing is performed by the CPU provided in the expansion board or the expansion unit, for example.

The present invention can be applied preferably to systems configured with image pickup apparatuses such as compact digital cameras, single-lens reflex cameras, video cameras, etc. and remote control terminals such as mobile phones, smartphones, portable game devices, etc.

According to a further aspect of the present of the present invention there is provided an image pickup apparatus, adapted to be used with a remote control apparatus external to the image pickup apparatus, the image pickup apparatus comprising:
image pickup means for performing photoelectric conversion on a series of captured images to generate a series of image signals each representing one of the images of the series of images;
image storage means for storing one or more images of the series of captured images;
communication means operable to send to the remote control apparatus the generated image signals and image identification information identifying the captured images represented respectively by the sent image signals, and further operable to receive from the remote control apparatus such image identification information relating to one of the image signals and position information relating to a target object specified by a user in the image represented by said one image signal; and
control means operable to use the received image identification information and position information to detect a target object in one of the series of images stored in said image storage means.

In one embodiment, the image identification information is timing information indicating a time at which the image signals representing the image concerned were sent to the remote control apparatus.

In another embodiment, the image identification information is a frame identifier of the image.

Preferably, the target object is specified by a user of the remote control apparatus when an image is displayed on a display (243) of the remote control apparatus (20) based on one of the sent image signals, and the received position information represents a position in the displayed image where the user-specified target object is located.

Preferably the received image identification information identifies the displayed image.

Preferably, the control means are operable to cause the images to be stored for a period at least equal to a time lag between capture of the image represented by an image signal and reception, following display at the remote control apparatus of an image based on the image signal concerned, of the image identification information and position information by the communication means.

Preferably, the control means is operable to measure a communication time lag between the image pickup apparatus and the remote control apparatus and to set the storage period in dependence upon the measured time lag.

When at least one intervening image is captured by the image pickup means between the image represented by the first image signal and a current image represented by a current image signal, the control means is preferably operable to perform the pattern matching in steps.

The steps preferably comprise at least a first step, in which pattern matching is performed between the image represented by the second image signal and such an intervening image to identify such a tracking region of the target object in the intervening image, and a second step in which pattern matching is performed between the intervening image of the first step or a subsequent intervening image to identify such a tracking region in the image represented by the current image signal.

According to a yet further aspect of the present invention there is provided a remote control apparatus (20), adapted to be used with an image pickup apparatus (10) external to the remote control apparatus embodying the preceding aspect of the invention, comprising:
receiving means (241) operable to receive image signals representing respectively images in a series of images captured by the image pickup apparatus and further operable to receive image identification information identifying the captured images represented respectively by the received image signals;
display means (243) operable to display an image based on such a received image signal;
target object specifying means operable, when the image based on such a received image signal is displayed by the display means, to enable a user of the remote control apparatus to specify a target object in the displayed image; and
sending means (241) configured to send to the image pickup apparatus the received image identification information for the image that was displayed when the user specified the target object.

In one embodiment, the image identification information is timing information indicating a time at which the image signals representing the image concerned were sent to the remote control apparatus.

In another embodiment, the image identification information is a frame identifier of the image.

Preferably, the sending means is further operable to send to the image pickup apparatus position information relating to a portion of the displayed image where the user-specified target object is located.

Further method aspects of the present invention can provide a method of controlling an image pickup apparatus embodying the last-but-one apparatus aspect of the present invention and a method of controlling a remote control apparatus embodying the last apparatus aspect of the present invention.
A further aspect of the present invention can provide a program which, when executed by a processor or computer in an image pickup apparatus, causes the processor or computer to carry out the method of controlling an image pickup apparatus of the last method aspect of the invention.

A still further aspect of the present invention can provide a program which, when executed by a processor or computer in a remote control apparatus, causes the processor or computer to carry out the method of controlling a remote control apparatus of the last method aspect of the invention.

## Claims

1. An image pickup apparatus (10), adapted to be used with a remote control apparatus (20) external to the image pickup apparatus, the image pickup apparatus comprising:
image pickup means (121) for performing photoelectric conversion on a captured image to generate a first image signal representing the image;
communication means (169) operable to send the generated first image signal to the remote control apparatus, and further operable to receive from the remote control apparatus a second image signal relating to the sent first image signal; and
control means (14, 124) operable to use the received second image signal to detect a target object in a further captured image represented by a third image signal generated by the image pickup means subsequently to the first image signal.

2. The image pickup apparatus (10) according to claim 1,
wherein the control means (14, 124) is operable to perform pattern matching between the received second image signal and the third image signal generated by the image pickup means to specify a tracking region of the target object.

3. The image pickup apparatus (10) according to claim 1 or 2,
wherein the control means (14) is operable to track the target object.

4. The image pickup apparatus (10) according to any one of claims 1 to 3,
wherein the target object is specified by a user of the remote control apparatus when an image is displayed on a display (243) of the remote control apparatus (20) based on the sent first image signal, and the second image signal represents an image that is a portion of the displayed image where the user-specified target object is located.

5. The image pickup apparatus (10) according to any one of claims 1 to 4,
wherein the control means (14, 124) is operable to perform pattern matching based on information relating to one or more predetermined characteristics calculated for the image represented by the second image signal and for the image represented by the third image signal.

6. The image pickup apparatus (10) according to claim 5,
wherein the characteristic information relates to at least one of color and luminance.

7. The image pickup apparatus (10) according to claim 2,
wherein at least one intervening image is captured by the image pickup means between the images represented respectively by the first and third image signals, and the control means is operable to perform the pattern matching in steps comprising at least a first step, in which pattern matching is performed between the image represented by the second image signal and such an intervening image to identify such a tracking region of the target object in the intervening image, and a second step in which pattern matching is performed between the intervening image of the first step or a subsequent intervening image to identify such a tracking region in the image represented by the third image signal.

8. The image pickup apparatus (10) according to claim 2 or 7,
wherein the control means (14, 124) is operable to perform at least one of an automatic focus control and an automatic exposure control based on the tracking region.

9. The image pickup apparatus (10) according to any one of claims 1 to 8,
wherein the communication means (169) is operable, when sending the first image signal, to further send time information relating to a time at which the first image signal is sent.

10. The image pickup apparatus according to any preceding claim, wherein the control means is operable to cause image signals captured by the image pickup means to be stored for a period at least equal to a time lag between capture of the image represented by the first image signal and reception of the second image signal by the communication means.

11. The image pickup apparatus according to claim 10, wherein the control means is operable to measure a communication time lag between the image pickup apparatus and the remote control apparatus and to set the storage period in dependence upon the measured time lag.

12. A remote control apparatus (20), adapted to be used with an image pickup apparatus (10) external to the remote control apparatus, comprising:
receiving means (241) operable to receive a first image signal representing an image captured by the image pickup apparatus;
display means (243) operable to display an image based on the received first image signal;
target object specifying means operable, when the image based on the received first image signal is displayed by the display means, to enable a user of the remote control apparatus to specify a target object in the displayed image;
image signal generating means (21) operable to generate a second image signal representing a portion of the displayed image where the user-specified target object is located; and
sending means (241) configured to send to the image pickup apparatus the second image signal generated by the image signal generating means.

13. The remote control apparatus (20) according to claim 12,
wherein the target object specifying means is operable, when the image based on the received first image signal is displayed by the display means, to enable a user of the remote control apparatus to specify a position of the target object in the displayed image, and the second image signal represents a predetermined region of the displayed image at the specified position.

14. The remote control apparatus (20) according to claim 12 or 13,
wherein the second image signal is used to identify a tracking region of the target object in the image pickup apparatus (10).

15. The remote control apparatus (20) according to any one of claims 12 to 14,
wherein
the receiving means (241) is further operable to receive time information relating to a time at which the first image signal is sent by an image pickup apparatus (10), and
the sending means (241) is further operable, when the display means (243) displays the image corresponding to the first image signal, to send the received time information to the image pickup apparatus (10).

16. The remote control apparatus (20) according to any one of claims 12 to 15,
wherein the receiving means (241) is operable to repeatedly receive image signals from the image pickup apparatus and the display means (243) is operable to display images corresponding respectively to the image signals repeatedly received.

17. A method of controlling an image pickup apparatus (10) adapted to be used with a remote control apparatus (20) external to the image pickup apparatus, the method comprising:
an image signal generating step of generating an image signal representing a captured image by performing photoelectric conversion on the captured image;
a sending step of sending the generated first image signal to the remote control apparatus;
a receiving step of receiving from the remote control apparatus a second image signal relating to the sent first image signal;
an object detection step of detecting, using the received second image signal, a target object in a further captured image represented by a third image signal generated subsequently to the first image signal.

18. The method of controlling the image pickup apparatus (10) according to claim 17,
wherein, in the target object detecting step, a tracking region of the target object is specified by performing pattern matching between the received second image signal and the third image signal.

19. The method of controlling the image pickup apparatus (10) according to claim 17 or 18,
wherein in the target object detecting step, the target object is tracked.

20. The method of controlling the image pickup apparatus (10) according to any one of claims 17 to 19,
wherein the target object is specified by a user of a remote control apparatus when an image is displayed on a display (243) of the remote control apparatus (20) based on the sent first image signal, and the second image signal represents an image that is a portion of the displayed image where the user-specified target object is located.

21. The method of controlling the image pickup apparatus (10) according to any one of claims 17 to 20,
wherein, in the target object detecting step, pattern matching is performed based on information relating to one or more predetermined characteristics calculated for the image represented by the second image signal and for the image represented by the third image signal.

22. The method of controlling the image pickup apparatus (10) according to claim 21,
wherein the characteristic information relates to at least one of color and luminance.

23. The method of controlling the image pickup apparatus (10) according to claim 18, wherein:
at least one intervening image is captured between the images represented respectively by the first and third image signals, and
the pattern matching is performed in steps comprising at least a first step, in which pattern matching is performed between the image represented by the second image signal and such an intervening image to identify such a tracking region of the target object in the intervening image, and a second step in which pattern matching is performed between the intervening image of the first step or a subsequent intervening image to identify such a tracking region in the image represented by the third image signal.

24. The method of controlling the image pickup apparatus (10) according to claim 18 or 23, further comprising a step of performing at least one of an automatic focus control and an automatic exposure control based on the tracking region.

25. The method of controlling the image pickup apparatus (10) according to any one of claims 17 to 24,
wherein the sending step further comprises sending, when the first image signal is sent, time information relating to a time at which the first image signal is sent.

26. The method of controlling the image pickup apparatus (10) according to any one of claims 18 to 25,
wherein image signals captured by the image pickup means are stored for a period at least equal to a time lag between capture of the image represented by the first image signal in said image signal generating step and reception of the second image signal in said receiving step.

27. The method of controlling the image pickup apparatus (10) according to claim 26, further comprising:
measuring a communication time lag between the image pickup apparatus and the remote control apparatus and setting the storage period in dependence upon the measured time lag.

28. A method of controlling a remote control apparatus (20), adapted to be used with an image pickup apparatus, the method comprising:
a receiving step of receiving a first image signal representing an image captured by the image pickup apparatus;
a displaying step of displaying an image based on the received first image signal;
a target object specifying step in which, when the image based on the received first image signal is displayed by the display means, a user of the remote control apparatus is enabled to specify a target object in the displayed image;
an image signal generating step of generating a second image signal representing a portion of the displayed image where the user-specified target object is located; and
a sending step of sending the generated second image signal to the image pickup apparatus.

29. The method of controlling the remote control apparatus (20) according to claim 29, wherein:
in the target object specifying step, when the image based on the received first image signal is displayed by the display means, a user of the remote control apparatus is enabled to specify a position of the target object in the displayed image; and
in the image signal generating step, the second image signal represents a predetermined region of the displayed image at the specified position.

30. The method of controlling the remote control apparatus (20) according to claim 28 or 29,
wherein the second image signal is used to identify a tracking region of the target object in the image pickup apparatus (10).

31. The method of controlling the remote control apparatus (20) according to any one of claims 28 to 30,
wherein:
the receiving step further comprises receiving time information relating to a time at which the first image signal is sent by the image pickup apparatus (10), and
the sending step comprises sending the received time information to the image pickup apparatus (10) when the image based on the first image signal is displayed.

32. The method of controlling the remote control apparatus (20) according to any one of claims 28 to 31,
wherein:
the receiving step comprises repeatedly receiving images from the image pickup apparatus, and
the displaying step comprises displaying images corresponding respectively to the repeatedly received image signals.

33. A program which, when executed by a processor or computer in an image pickup apparatus, causes the processor or computer to carry out the method of any one of claims 17 to 27.

34. A program which, when executed by a processor or computer in a remote control apparatus, causes the processor or computer to carry out the method of any one of claims 28 to 32.
